(19) Europäisches Patentamt / European Patent Office / Office européen des brevets

(11) **EP 4 810 248 A1**

(12) **EUROPEAN PATENT APPLICATION**
published in accordance with Art. 153(4) EPC

(43) Date of publication:
**23.09.2026 Bulletin 2026/39**

(21) Application number: **24891530.8**

(22) Date of filing: **15.11.2024**

(51) International Patent Classification (IPC):
***B32B 15/08*** (2006.01) ***B32B 27/20*** (2006.01)
***C22C 18/00*** (2006.01) ***C22C 18/04*** (2006.01)
***C22C 21/02*** (2006.01) ***C22C 38/00*** (2006.01)
***C22C 38/60*** (2006.01) ***C23C 28/00*** (2006.01)

(52) Cooperative Patent Classification (CPC):
**B32B 15/08; B32B 27/20; C22C 18/00; C22C 18/04; C22C 21/02; C22C 38/00; C22C 38/60; C23C 28/00**

(86) International application number:
**PCT/JP2024/040740**

(87) International publication number:
**WO 2025/105495 (22.05.2025 Gazette 2025/21)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **17.11.2023 JP 2023196298**

(71) Applicant: **Nippon Steel Corporation**
**Tokyo 100-8071 (JP)**

(72) Inventors:
- **MATSUNO, Masanori**
  **Tokyo 100-8071 (JP)**
- **FUTABA, Takashi**
  **Tokyo 100-8071 (JP)**
- **UEDA, Koichiro**
  **Tokyo 100-8071 (JP)**

(74) Representative: **Zimmermann & Partner Patentanwälte mbB**
**P.O. Box 330 920**
**80069 München (DE)**

(54) **DECORATIVE METAL PLATE**

(57) A decorative metal sheet in which excellent chemical resistance is obtained, and in which excellent corrosion resistance is obtained even when subjected to bending is provided. In a decorative metal sheet (1) of the present disclosure, a lower resin layer (20) formed on a metallic substrate (10) contains a rust preventive pigment in an amount of 0.2 to 30.0% in percent by mass, and first organic resin. When the rust preventive pigment is in particulate form, the mean particle size is 1.00 μm or less. An upper resin layer (30) contains second organic resin in an amount of 95% in percent by mass or more. When bending by 180° with an inner bending radius of 2t is performed on the decorative metal sheet so that the upper resin layer (30) side of the decorative metal sheet (1) curves convexly, on the surface of the upper resin layer (30) of a convex curved portion of the decorative metal sheet (1) after bending, in a surface region which is a square of 200 μm × 200 μm and in which a ridge line of the curved portion is located at a central position between two opposing sides of the square, a crack area fraction of the upper resin layer is 10.0% or less.

FIG.1

1
L
W
T
30
20
10S
102
10
101

EP 4 810 248 A1

## Description

TECHNICAL FIELD

The present disclosure relates a decorative metal sheet, and more particularly relates to a decorative metal sheet on which a resin layer is formed on a surface.

BACKGROUND ART

Household electrical appliances typified by washing machines are sometimes required to have design properties. Recently, there has been a tendency to favor materials which make use of the texture of metal, especially in Europe and the United States where many people are nature oriented. In the case of making use of the texture of metal, metal sheets such as stainless steel sheets or aluminum sheets or the like, which are excellent in corrosion resistance, are used. In addition, in order to further express the metallic feeling of stainless steel sheets and aluminum sheets, metal sheets that have a texture typified by hairlines formed on a surface thereof are also being provided.

Because stainless steel sheets and aluminum sheets are expensive, metal sheets that have a plating layer on a surface have been developed as one kind of alternative material to be used in place of stainless steel sheets and aluminum sheets. Similarly to a stainless steel sheet or an aluminum sheet, a metal sheet provided with a plating layer has appropriate corrosion resistance. In addition, a metal sheet provided with a plating layer has an excellent metal texture. Furthermore, if a texture is formed on a surface of the plating layer, excellent design properties can further be obtained. For this reason, metal sheets that have a plating layer are suitable for application to household electrical appliances such as a housing of a washing machine, similarly to stainless steel sheets and aluminum sheets.

For example, Japanese Patent Application Publication No. 2006-124824 (Patent Literature 1) and Japanese Translation of PCT International Application Publication No. 2013-536901 (Patent Literature 2) disclose such type of decorative metal sheets.

According to Patent Literature 1, after a hairline finish is formed on a galvanized steel sheet, a transparent resin coating is formed on a surface of a galvanized layer on which hairlines have been formed. The transparent resin coating increases corrosion resistance while also increasing the visibility of the surface of the plating layer, and furthermore increases scratch resistance.

According to Patent Literature 2, a galvanized steel sheet is subjected to rolling to form a texture on a surface of a galvanized layer, and thereafter the surface of the galvanized layer is coated with an organic film (resin) so that the surface roughness falls within a certain range. By this means, the visibility of the plating layer is increased while also maintaining corrosion resistance.

CITATION LIST

PATENT LITERATURE

Patent Literature 1: Japanese Patent Application Publication No. 2006-124824
Patent Literature 2: Japanese Translation of PCT International Application Publication No. 2013-536901

SUMMARY OF INVENTION

TECHNICAL PROBLEM

In this connection, household electrical appliances such as washing machines and dishwashers use not only water but also chemicals that are typified by detergents during operation. Therefore, decorative metal sheets used in these household electrical appliances are required to have not only excellent corrosion resistance but also excellent chemical resistance.

In addition, decorative metal sheets for use in household electrical appliances are formed into predetermined shapes by bending that is typified by press working. Therefore, it is necessary for excellent corrosion resistance to be maintained even after bending has been performed.

An objective of the present disclosure is to provide a decorative metal sheet in which excellent chemical resistance is obtained, and in which excellent corrosion resistance is obtained even when bending has been performed.

## SOLUTION TO PROBLEM

A decorative metal sheet of the present disclosure includes a metallic substrate, a lower resin layer, and an upper resin layer. The lower resin layer is formed on the metallic substrate. The upper resin layer is formed as an outermost layer on the lower resin layer. The lower resin layer contains a rust preventive pigment and first organic resin. The rust preventive pigment is dissolved in the lower resin layer and/or is in particulate form in the lower resin layer, and a content of the rust preventive pigment is 0.2 to 30.0% in percent by mass. When the lower resin layer contains the rust preventive pigment in particulate form, a mean particle size of the rust preventive pigment in particulate form is 1.00 μm or less. The upper resin layer contains second organic resin in an amount of 95% or more in percent by mass. In the decorative metal sheet of the present disclosure, in addition, when a sheet thickness of the decorative metal sheet is represented by t (mm), and bending by 180° with an inner bending radius of 2t is performed on the decorative metal sheet by bending defined in JIS Z 2248: 2022 so that the upper resin layer side curves convexly, on a surface of the upper resin layer of a convex curved portion of the decorative metal sheet after bending, in a surface region which is a square of 200 μm x 200 μm and in which a ridge line of the curved portion is located at a central position between two opposing sides of the square, a crack area fraction of the upper resin layer is 10.0% or less.

## ADVANTAGEOUS EFFECTS OF INVENTION

In the decorative metal sheet of the present disclosure, excellent chemical resistance is obtained, and excellent corrosion resistance is obtained even when the decorative metal sheet has been subjected to bending.

## BRIEF DESCRIPTION OF DRAWINGS

[FIG. 1] FIG. 1 is a cross-sectional view perpendicular to a rolling elongation direction of a decorative metal sheet of the present embodiment.
[FIG. 2] FIG. 2 is a cross-sectional view perpendicular to the rolling elongation direction of the decorative metal sheet of the present embodiment that is different from FIG. 1.
[FIG. 3] FIG. 3 is a plan view of a surface of a metallic substrate of the decorative metal sheet illustrated in FIG. 1 or FIG. 2.
[FIG. 4] FIG. 4 is a schematic diagram for describing a method for measuring the content of a rust preventive pigment in a lower resin layer.
[FIG. 5] FIG. 5 is a schematic diagram for describing a method for measuring the content of second organic resin in an upper resin layer.
[FIG. 6] FIG. 6 is a schematic diagram for describing a process in a bending test for evaluating the ductility of an upper resin layer.
[FIG. 7] FIG. 7 is a schematic diagram for describing a process in the bending test, which follows FIG. 6.
[FIG. 8] FIG. 8 is a diagram illustrating a state of a decorative metal sheet (sheet-like test specimen) which underwent 180° bending obtained in the bending test illustrated in FIG. 7, as seen in side view and as seen in plan view.
[FIG. 9] FIG. 9 is a schematic diagram of a surface region illustrated in FIG. 8.
[FIG. 10] FIG. 10 is a photographic image showing an example of a surface region obtained when the decorative metal sheet was subjected to bending, and in which cracks have occurred.
[FIG. 11] FIG. 11 is a photographic image showing an example of the surface region obtained when the decorative metal sheet was subjected to bending, and in which cracks have occurred, which is different from the example in FIG. 10.
[FIG. 12] FIG. 12 is a photographic image showing an example of the surface region obtained when the decorative metal sheet of the present embodiment was subjected to bending.
[FIG. 13] FIG. 13 is a cross-sectional view perpendicular to a rolling elongation direction of another decorative metal sheet of the present embodiment that is different from FIG. 1.
[FIG. 14] FIG. 14 is a plan view of a sheet-like test specimen used in a crosscut corrosion resistance evaluation test.
[FIG. 15] FIG. 15 is a plan view of a sheet-like test specimen after completion of a salt spray test in the crosscut corrosion resistance evaluation test.
[FIG. 16] FIG. 16 is a diagram illustrating a sheet-like test specimen after bending as seen in side view and as seen in plan view in the examples.

DESCRIPTION OF EMBODIMENTS

The present inventors conducted studies regarding decorative metal sheets in which excellent chemical resistance is obtained, and in which excellent corrosion resistance is obtained even when the decorative metal sheet has been subjected to bending.

The present inventors have initially thought that if a single resin layer is formed on a metallic substrate, and the resin layer contains a rust preventive pigment, corrosion resistance and chemical resistance will be obtained. However, in the case of decorative metal sheets composed as described above, although sufficient corrosion resistance was obtained if the decorative metal sheets were not subjected to bending, there were some cases where sufficient chemical resistance was not obtained. Therefore, the present inventors conducted studies to identify the reason why sufficient chemical resistance was not obtained. As a result, the present inventors obtained the following finding.

When the resin layer contains the rust preventive pigment, corrosion resistance is increased by the rust preventive pigment. However, if the rust preventive pigment is contained in the resin layer, a chemical may sometimes react with the rust preventive pigment in the resin layer. In some cases, voids may be generated at portions where the rust preventive pigment reacted with the chemical, and the chemical may pass through the voids and permeate into the resin layer. In such cases, the chemical resistance will decrease.

Based on the above finding, the present inventors have conceived of adopting a structure in which the resin layer consists of at least two layers. Further, the present inventors have conceived of adopting a structure consisting of two layers in which a lower resin layer contains organic resin and a rust preventive pigment, and an upper resin layer as an outermost layer formed on the lower resin layer is composed substantially of organic resin, and the content of addition agents is minimized as much as possible. In this case, the lower resin layer can increase corrosion resistance by means of the rust preventive pigment. On the other hand, because the upper resin layer is composed substantially of organic resin, permeation of chemicals and corrosion factors can be suppressed. Therefore, the present inventors have thought that by adopting such a multi-layer structure for the resin layer, it would be possible to achieve both excellent corrosion resistance and excellent chemical resistance.

As a result of further studies and investigations, it was found that when a decorative metal sheet had a structure in which the aforementioned multi-layer structure was adopted for the resin layer, it was indeed possible to achieve both excellent corrosion resistance and excellent chemical resistance when the decorative metal sheet was not subjected to bending. However, when the decorative metal sheet was subjected to bending, there were cases where corrosion resistance decreased. Therefore, the present inventors conducted further studies. As a result, the present inventors newly obtained the following finding.

Even in a case where the upper resin layer is formed as a layer composed substantially of organic resin, microcracks may occur at a surface of the upper resin layer as a result of bending being performed. In such a case, corrosion factors may permeate through the microcracks.

Based on the above finding, the present inventors have thought that if the upper resin layer has excellent ductility, even if bending is performed, the occurrence of microcracks can be suppressed, and as a result, excellent corrosion resistance will be maintained. Therefore, the present inventors conducted studies regarding the ductility of the upper resin layer. As a result, the present inventors have discovered that when a sheet thickness of the decorative metal sheet is represented by t (mm), and bending by 180° with an inner bending radius of 2t is performed on the decorative metal sheet by bending defined in JIS Z 2248: 2022 so that the upper resin layer side curves convexly, on a surface of the upper resin layer of a convex curved portion of the decorative metal sheet after bending, in a surface region which is a square of 200 μm x 200 μm and in which a ridge line of the curved portion is located at a central position between two opposing sides of the square, if a crack area fraction is 10.0% or less, the decorative metal sheet will have excellent corrosion resistance and excellent chemical resistance, and in addition, excellent corrosion resistance will be maintained even after performing bending.

The decorative metal sheet of the present disclosure was completed based on the technical idea described above, and has the following configurations.

A decorative metal sheet according to a first configuration includes a metallic substrate, a lower resin layer, and an upper resin layer. The lower resin layer is formed on the metallic substrate. The upper resin layer is formed as an outermost layer on the lower resin layer. The lower resin layer contains a rust preventive pigment and first organic resin. The rust preventive pigment is dissolved in the lower resin layer and/or is in particulate form in the lower resin layer, and a content of the rust preventive pigment is 0.2 to 30.0% in percent by mass. When the lower resin layer contains the rust preventive pigment in particulate form, a mean particle size of the rust preventive pigment in particulate form is 1.00 μm or less. The upper resin layer contains second organic resin in an amount of 95% or more in percent by mass. In the decorative metal sheet of the present disclosure, in addition, when a sheet thickness of the decorative metal sheet is represented by t (mm), and bending by 180° with an inner bending radius of 2t is performed on the decorative metal sheet by bending defined in JIS Z 2248: 2022 so that the upper resin layer side curves convexly, on a surface of the upper resin layer of a convex curved portion of the decorative metal sheet after bending, in a surface region which is a square of 200 μm

x 200 μm and in which a ridge line of the curved portion is located at a central position between two opposing sides of the square, a crack area fraction of the upper resin layer is 10.0% or less.

In the decorative metal sheet according to the first configuration, the lower resin layer contains an appropriate amount of the rust preventive pigment, and in addition, even if the rust preventive pigment is in particulate form, the mean particle size of the rust preventive pigment is within an appropriate range. Furthermore, the upper resin layer has a high organic resin content. Therefore, the upper resin layer suppresses the permeation of chemicals or corrosion factors. Therefore, in the decorative metal sheet that has the above configuration, excellent visibility, excellent corrosion resistance, and excellent chemical resistance are obtained. In addition, even in a case where the aforementioned bending is performed on the decorative metal sheet having the above configuration, the occurrence of cracks in the upper resin layer is sufficiently suppressed. Therefore, even if bending is performed, the upper resin layer sufficiently suppresses permeation of corrosion factors. As a result, excellent corrosion resistance is maintained even if bending is performed.

A decorative metal sheet according to a second configuration is in accordance with the decorative metal sheet of the first configuration, wherein the rust preventive pigment contains one or more types of element selected from a group consisting of Mo, P, V, Zr, Ti, and Ba.

In the decorative metal sheet according to the second configuration, corrosion resistance is further increased.

A decorative metal sheet according to a third configuration is in accordance with the decorative metal sheet of the first or second configuration, wherein a layer thickness of the lower resin layer is 1.0 to 5.0 μm, and a layer thickness of the upper resin layer is 5.0 to 10.0 μm.

In the decorative metal sheet according to the third configuration, the layer thickness of each of the lower resin layer and the upper resin layer is in a more appropriate range. Therefore, excellent corrosion resistance and excellent chemical resistance are obtained, and even if bending is performed, even more excellent corrosion resistance will be obtained. Further, the visibility of a metal base material when the decorative metal sheet is visually observed from the upper resin layer side is further increased.

A decorative metal sheet according to a fourth configuration is in accordance with the decorative metal sheet of the third configuration, wherein a total of the layer thickness of the lower resin layer and the layer thickness of the upper resin layer is 9.0 to 15.0 μm.

In the decorative metal sheet according to the fourth configuration, corrosion resistance and chemical resistance are further increased, and the corrosion resistance in a case where bending is performed also increases. In addition, the visibility of the metal base material when the decorative metal sheet is visually observed from the upper resin layer side is further increased.

A decorative metal sheet according to a fifth configuration is in accordance with the decorative metal sheet of any one of the first to fourth configurations, wherein a texture is formed on a surface of the metallic substrate.

In the decorative metal sheet according to the fifth configuration, design properties are further enhanced.

A decorative metal sheet according to a sixth configuration is in accordance with the decorative metal sheet of the fifth configuration, wherein the texture is hairlines.

In the decorative metal sheet according to the sixth configuration, design properties are further enhanced.

A decorative metal sheet according to a seventh configuration is in accordance with the decorative metal sheet of any one of the first to sixth configurations, wherein the metallic substrate includes a base metal sheet and a plating layer. The plating layer is formed on a surface of the base metal sheet.

In the decorative metal sheet according to the seventh configuration, even more excellent corrosion resistance is obtained.

A decorative metal sheet according to an eighth configuration is in accordance with the decorative metal sheet of any one of the first to seventh configurations, wherein the decorative metal sheet further includes a chemical conversion coating. The chemical conversion coating is formed on a surface of the metallic substrate. The lower resin layer is formed on the chemical conversion coating.

In the decorative metal sheet according to the eighth configuration, even more excellent corrosion resistance is obtained.

Hereunder, a decorative metal sheet of the present embodiment is described in detail.

<1. Regarding decorative metal sheet 1>

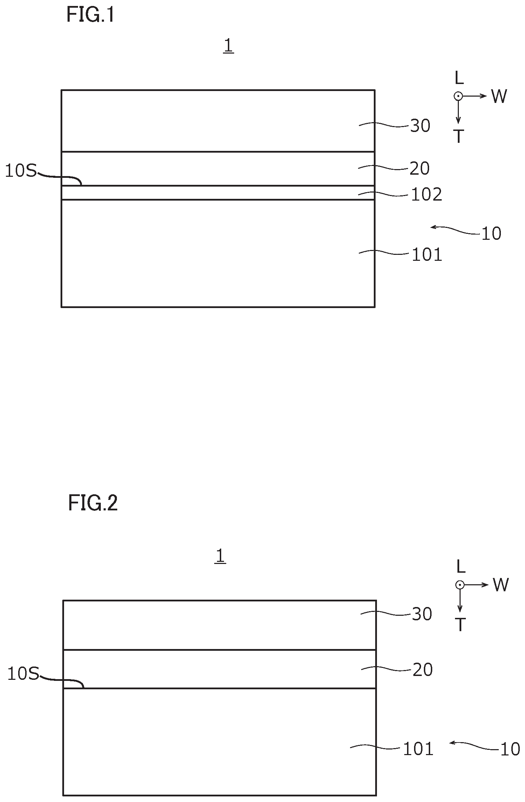

FIG. 1 is a cross-sectional view perpendicular to a rolling elongation direction of a decorative metal sheet 1 of the present embodiment. In FIG. 1, the rolling elongation direction of the decorative metal sheet 1 is defined as an "L direction". A thickness direction of the decorative metal sheet 1 is defined as a "T direction". A direction perpendicular to the L direction and the T direction of the decorative metal sheet 1 (that is, a width direction of the decorative metal sheet 1) is defined as a "W direction".

Referring to FIG. 1, the decorative metal sheet 1 of the present embodiment includes a metallic substrate 10, a lower resin layer 20, and an upper resin layer 30. The metallic substrate 10 is a base material of the decorative metal sheet

1. In FIG. 1, the metallic substrate 10 includes a base metal sheet 101 and a plating layer 102. The plating layer 102 is formed on a surface of the base metal sheet 101. The lower resin layer 20 and the upper resin layer 30 increase corrosion resistance and chemical resistance of the decorative metal sheet 1. A thickness of the decorative metal sheet 1 is not particularly limited. The thickness of the decorative metal sheet 1 is for example, 0.3 to 2.3 mm.

As illustrated in FIG. 2, the metallic substrate 10 may consist of the base metal sheet 101, and does not have to include the plating layer 102. That is, in the decorative metal sheet 1 of the present embodiment, the plating layer 102 is an optional component.

Hereunder, the metallic substrate 10, the lower resin layer 20, and the upper resin layer 30 are described.

<2. Regarding metallic substrate 10>

The metallic substrate 10 is the base material of the decorative metal sheet 1. As described above, the metallic substrate 10 may consist of only the base metal sheet 101, or may include the base metal sheet 101 and the plating layer 102.

[2.1. Regarding base metal sheet 101]

The base metal sheet 101 is composed of a metal that corresponds to mechanical properties (for example, tensile strength, workability and the like) required of the decorative metal sheet 1. In other words, the type of base metal sheet 101 is not particularly limited. The metallic substrate 10 is, for example, a steel sheet, an aluminum sheet, an aluminum alloy sheet, or a titanium alloy sheet.

In a case where the metallic substrate 10 is a steel sheet, the type of the steel sheet is, for example, SPHC, SPHD, SPHE, SPCC, SPCD, SPCF or the like defined by the JIS Standard (JIS G 3131: 2018).

In a case where the metallic substrate 10 is an aluminum sheet, the type of the aluminum sheet is, for example, A1050P, A1080P, A1070P, A1100P or the like defined by the JIS Standard (JIS H 4000: 2014).

In a case where the metallic substrate 10 is an aluminum alloy sheet, the type of the aluminum alloy sheet is, for example, A2014P, A3003P, A3104P, A5005P or the like defined by the JIS Standard (JIS H 4000: 2014).

[2.2. Regarding plating layer 102]

As mentioned above, the plating layer 102 is an optional component in the decorative metal sheet 1 of the present embodiment. In other words, the metallic substrate 10 may include the plating layer 102, or need not include the plating layer 102. In a case where the metallic substrate 10 includes the plating layer 102, the corrosion resistance of the decorative metal sheet 1 increases further.

The plating layer 102 is, for example, a Ni-based plating layer, a Cu-based plating layer, a zinc-based (Zn-based) plating layer, a Au-based plating layer, a Sn-based plating layer, an Al-based plating layer, or an alloy plating layer containing two or more types of element among Ni, Cu, Zn, Au, Sn, and Al. The above-mentioned X-based plating layer (X is one type of element among Ni, Cu, Zn, Au, Sn, and Al) means a plating layer mainly composed of X. The phrase "mainly composed of X" means that the content of X that is the main constituent element in the plating layer is at least 50% by mass or more. For example, the term "zinc-based plating layer" means a plating layer in which the content of Zn is 50% by mass or more.

In a case where the metallic substrate 10 is a steel sheet, preferably the plating layer 102 is composed of one or more types selected from a group consisting of a zinc-based plating layer and an Al-based plating layer. Zn and Al are base metals compared to Fe. Therefore, a zinc-based plating layer and an Al-based plating layer exert a sacrificial protection function with respect to the metallic substrate 10 that is a steel material. As a result, excellent corrosion resistance is obtained.

The zinc-based plating layer may be a plating layer composed of zinc plating, or may be a plating layer composed of zinc alloy plating.

The zinc-based plating layer is formed by a well-known plating treatment. For example, the zinc-based plating layer may be formed by either plating method among an electroplating method and a hot-dip plating method. The term "zinc-based plating layer" is a concept that includes an electrogalvanized layer, an electrogalvannealed layer, a hot dip galvanized layer, and a hot dip galvannealed layer.

It suffices that the zinc-based plating layer has a well-known chemical composition. A preferable content of Zn in the chemical composition of the zinc-based plating layer is 65% by mass or more. If the content of Zn is 65% or more in percent by mass, a sacrificial protection function will be markedly exhibited, and corrosion resistance of the decorative metal sheet 1 will markedly increase. A preferable lower limit of the content of Zn in the chemical composition of the zinc-based plating layer is 70% by mass, and more preferably is 80% by mass.

The chemical composition of the zinc-based plating layer preferably contains Zn and one or more types of

element selected from a group of elements consisting of Al, Fe, Co, Cr, Cu, Ni, P, Si, Sn, Mg, Mn, Mo, V, W, Zr, Ca, Y, La, Ce, Bi, In, Ti, V, Nb, Cu, Mn, Sr, Sb, Pb, and B. In addition, in a case where the zinc-based plating layer is an electrogalvanized layer, the chemical composition of the zinc-based plating layer more preferably contains one or more types of element selected from a group of elements consisting of Fe, Ni, and Co in a total amount of 5 to 20% by mass. In a case where the zinc-based plating layer is a hot dip galvanized layer, the chemical composition of the zinc-based plating layer more preferably contains one or more types of element selected from a group of elements consisting of Mg, Al, and Si in a total amount of 5 to 49% by mass. In these cases, the zinc-based plating layer exhibits even more excellent corrosion resistance.

Preferably, the zinc-based plating layer consists of Zn-Ni plating. Zn-Ni plating is excellent in corrosion resistance, and also has high hardness. Therefore, Zn-Ni plating is favorable as the zinc-based plating layer.

In the Zn-Ni plating, a preferable content of Ni is 9.0 to 20.0% by mass. In this case, the Zn-Ni plating will be a $\gamma$ monophase. Therefore, the hardness of the Zn-Ni plating will further increase. A more preferable lower limit of the content of Ni is 10.0% by mass, further preferably is 11.0% by mass, further preferably is 12.0% by mass, and further preferably is 14.0% by mass. A more preferable upper limit of the content of Ni is 18.0% by mass, further preferably is 17.0% by mass, and further preferably is 16.0% by mass.

The zinc-based plating layer may contain impurities. Here, the term "impurities" refers to substances which are mixed into the raw material or which are mixed in during a production process. Examples of impurities include Ti, B, S, N, C, Nb, Pb, Cd, Ca, Pb, Y, La, Ce, Sr, Sb, O, F, Cl, Ag, H and the like. In the chemical composition of the plating layer 102, the total content of impurities is preferably 1.0% by mass or less.

Further preferably, the plating layer is one or more types selected from a group consisting of Zn plating, Zn-Ni plating, Zn-Fe plating, Zn-Co plating, Zn-Al plating, Zn-Fe-Al plating, Al-Si plating, and Zn-Al-Mg plating.

The Zn-Ni plating contains 9.0% by mass or more of Ni.

The Zn-Fe plating contains 10.0% by mass or more of Fe.

The Zn-Fe-Al plating contains 7.0% by mass or more of Fe, and 0.05% by mass or more and 0.50% by mass or less of Al.

The Zn-Al-Mg plating contains 3.0% by mass or more of Al, and 2.0% by mass or more of Mg.

The Al-Si plating contains 2.0% by mass or more of Si.

[2.3. Method for measuring chemical composition of plating layer 102]

The chemical composition of the plating layer 102 is measured, for example, by the following method.

A test specimen that includes the plating layer 102 and also includes the surface of the plating layer 102 is prepared from the decorative metal sheet 1. A cross section of the test specimen perpendicular to the surface of the plating layer 102 is adopted as the observation surface. After embedding the test specimen in resin, the observation surface of the test specimen is mirror-polished. After polishing, square measurement regions having dimensions of 1.0 $\mu$m $\times$ 1.0 $\mu$m are selected at 50 locations within the plating layer 102 on the observation surface. Surface analysis using energy dispersive X-ray spectrometry (EDS) is performed at each of the 50 measurement regions. The contents of the elements contained in each measurement region are determined by the EDS surface analysis. In the EDS surface analysis, the acceleration voltage is set to 15 kV, and the surface analysis is conducted for quantification of Zn, Al, Co, Cr, Cu, Fe, Ni, P, Si, Sn, Mg, Mn, Mo, V, and W, and Zr, Ti, B, S, N, C, Nb, Pb, Cd, Ca, Pb, Y, La, Ce, Sr, Sb, O, F, Cl, Ag, and H as elements to be analyzed.

The arithmetic average value of the contents of the respective elements obtained at the 50 measurement regions is determined. Note that, if the determined content (arithmetic average value) of Zn is 50% by mass or more, it is determined that the plating layer 102 that is the measurement object is a zinc-based plating layer.

[2.4. Regarding texture TX]

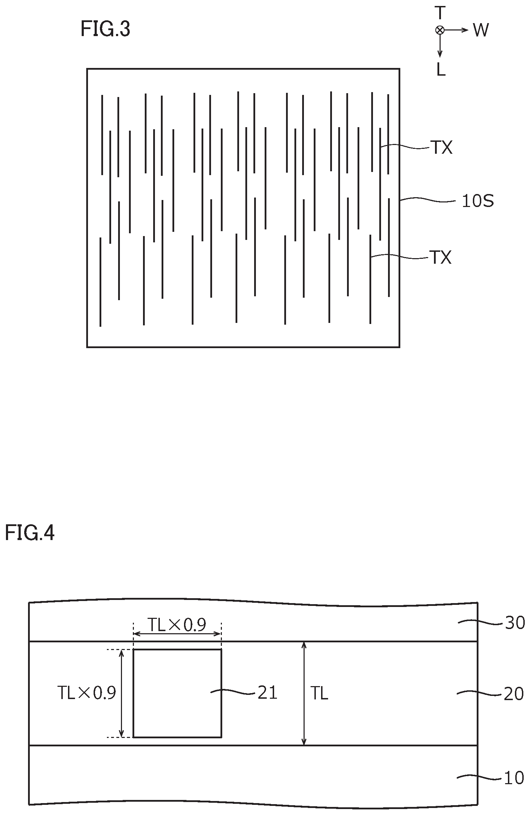

Referring to FIG. 3, a texture TX may be formed on a surface 10S of the metallic substrate 10. In a case where the metallic substrate 10 consists of the base metal sheet 101, the surface 10S of the metallic substrate 10 is the surface of the base metal sheet 101. In a case where the metallic substrate 10 includes the base metal sheet 101 and the plating layer 102, the surface 10S of the metallic substrate 10 is the surface of the plating layer 102.

The term "texture TX" means a concavo-convex pattern that is formed on the surface 10S by a physical or chemical technique. The texture TX is a three-dimensional concavo-convex pattern on the surface 10S. The texture TX further enhances the design properties of the decorative metal sheet 1.

The texture TX is, for example, well-known hairlines, embossment, dots, a vibration finish, a satin (blast) finish, a hammered finish, a fabric (satin) finish or the like. Preferably, the texture TX is hairlines.

<3. Regarding lower resin layer 20>

The lower resin layer 20 is formed on the metallic substrate 10. The lower resin layer 20 increases corrosion resistance of the decorative metal sheet 1. The lower resin layer 20 contains first organic resin and a rust preventive pigment. Hereunder, the first organic resin and the rust preventive pigment are described.

[3.1. Regarding first organic resin]

The first organic resin mainly constitutes a film structure of the lower resin layer 20. That is, the first organic resin functions as a binder. The first organic resin is composed of, for example, one or more types selected from a group consisting of well-known natural resin and well-known synthetic resin.

The first organic resin is composed of, for example, one or more types selected from a group consisting of epoxy-based resin, urethane-based resin, polyester-based resin, phenol-based resin, polyethersulfone-based resin, melamine-alkyd-based resin, acryl-based resin, polyamide-based resin, polyimide-based resin, silicone-based resin, polyvinyl acetate-based resin, polyolefin-based resin, polystyrene-based resin, vinyl chloride-based resin, and vinyl acetate-based resin.

Preferably, the first organic resin is, for example, one or more types selected from a group consisting of polyester-based resin, urethane-based resin, and epoxy-based resin or the like. The decorative metal sheet 1 in which the lower resin layer 20, in which the first organic resin composed of these resins is the main component of the film structure, is formed is excellent in workability. Furthermore, the first organic resin composed of these resins has high adhesion to the metallic substrate 10.

In a case where the first organic resin contains one or more types selected from a group consisting of polyester-based resin and urethane-based resin, and also contains melamine-based resin, the melamine-based resin reacts with the functional groups of the polyester-based resin and the urethane-based resin and thereby increases the degree of crosslinking. Therefore, in this case, in the lower resin layer 20, the permeability of corrosion factors is further reduced. As a result, the chemical resistance and corrosion resistance of the decorative metal sheet 1 are further increased. Furthermore, the hardness of the lower resin layer 20 increases, and the scratch resistance of the decorative metal sheet 1 increases. Therefore, further preferably, the organic resin of the lower resin layer 20 is composed of a melamine-based resin and at least one type of polyester-based resin and urethane-based resin.

[3.2. Regarding rust preventive pigment]

The rust preventive pigment is a pigment whose chemical composition has a function of suppressing corrosion of metal. Specifically, the rust preventive pigment exhibits a rust prevention effect based on anticorrosive ions eluted from the rust preventive pigment itself. The rust preventive pigment may be dissolved in the lower resin layer 20, or may be contained as particles (in particulate form) in the lower resin layer 20. The lower resin layer 20 may contain both the rust preventive pigment that is in a dissolved state and the rust preventive pigment that is in particulate form.

The composition of the rust preventive pigment is not particularly limited as long as the aforementioned effect is exhibited. Preferably, the rust preventive pigment contains one or more types of element selected from a group consisting of Mo, P, V, Zr, Ti, and Ba. The rust preventive pigment is, for example, one or more types selected from a group consisting of molybdate-based pigments, phosphate-based pigments, vanadium-based pigments, zirconium-based pigments, titanium-based pigments, and barium-based pigments.

More specifically, the rust preventive pigment is, for example one or more types selected from a group consisting of the following compounds.

Molybdate-based pigments: one or more types selected from a group consisting of zinc phosphomolybdate and molybdic acid.

Phosphate-based pigments: one or more types selected from a group consisting of zinc phosphate, zinc phosphite, zinc magnesium phosphate, magnesium phosphate, magnesium phosphite, aluminum dihydrogen triphosphate, and diammonium hydrogen phosphate.

Vanadium-based pigments: one or more types selected from a group consisting of vanadium oxide, ammonium metavanadate, and potassium metavanadate.

Zirconium-based pigments: one or more types selected from a group consisting of zirconium oxide and zirconium phosphate.

Titanium-based pigments: one or more types selected from a group consisting of titanium hydrofluoric acid, ammonium titanium fluoride, and organic titanium.

Barium-based pigments: One or more types selected from a group consisting of barium metaborate and barium sulfate.

(3.2.1. Regarding content of rust preventive pigment in lower resin layer 20)

The content of the rust preventive pigment in the lower resin layer 20 is, in percent by mass, 0.2 to 30.0%. If the content of the rust preventive pigment is less than 0.2%, sufficient corrosion resistance will not be obtained in the decorative metal sheet 1. On the other hand, if the content of the rust preventive pigment is more than 30.0%, visibility of the decorative metal sheet 1 may decrease or corrosion resistance of the decorative metal sheet 1 may, instead, decrease. Therefore, the content of the rust preventive pigment in the lower resin layer 20 is, in percent by mass, 0.2 to 30.0%.

A preferable lower limit of the rust preventive pigment is 0.3%, more preferably is 0.4%, and further preferably is 0.5%.

A preferable upper limit of the rust preventive pigment is 28.0%, more preferably is 25.0%, further preferably is 20.0%, further preferably is 17.0%, further preferably is 15.0%, further preferably is 12.0%, and further preferably is 10.0%. If the content of the rust preventive pigment is 10.0% or less, excellent visibility will be obtained in the decorative metal sheet 1.

(3.2.2. Regarding method for measuring content of rust preventive pigment in lower resin layer 20)

The content of the rust preventive pigment in the lower resin layer 20 is determined by the following method.

The decorative metal sheet 1 is cut in the thickness direction to prepare a test specimen that includes the upper resin layer 30, the lower resin layer 20, and the metallic substrate 10, and also includes the surface of the upper resin layer 30. A cross section of the test specimen perpendicular to the surface of the upper resin layer 30 is adopted as the observation surface. After embedding the test specimen in resin, the observation surface of the test specimen is mirror-polished.

On the observation surface, an arbitrary observation region which includes at least the surface of the upper resin layer 30, the lower resin layer 20, and a part of the surface of the metallic substrate 10 is observed at a magnification of ×5000 using a scanning electron microscope having a composition analysis function (SEM-EDS apparatus) to obtain an observation image (secondary electron image). The size of the observation region is to be 40 μm × 40 μm.

In the observation region, the interface between the upper resin layer 30 and the lower resin layer 20 is then identified. The interface between the upper resin layer 30 and the lower resin layer 20 can be easily identified based on contrast. The upper resin layer 30 and the lower resin layer 20 are identified by the above method. After identifying the interface, the layer thickness is measured at an arbitrary five locations on the lower resin layer 20. The arithmetic average value of the obtained five layer thicknesses is defined as a layer thickness TL (μm) of the lower resin layer 20. The layer thickness TL is to be made a value to the first decimal place by rounding off the obtained numerical value at the second decimal place.

An SEM-EDS apparatus is used to perform element concentration analysis (EDS surface analysis) on an arbitrary measurement region within the lower resin layer 20 of the observation region. As illustrated in FIG. 4, the size of a measurement region 21 is to be a square having dimensions of the layer thickness TL × 0.9 μm in the thickness direction of the lower resin layer 20, and the layer thickness TL × 0.9 μm in the perpendicular direction to the thickness direction. As described above, the layer thickness TL is an arithmetic average value, and the layer thickness of the lower resin layer 20 is not uniform and may vary. Therefore, the position of the measurement region 21 is to be selected so that the entire measurement region 21 is included within the lower resin layer 20. Five measurement regions 21 are to be selected within the lower resin layer 20.

Each of the measurement regions 21 is subjected to EDS surface analysis. In the EDS surface analysis, the accelerating voltage is set to 15 kV and quantitative analysis of elements (total elemental analysis) is performed. A total content $T_{20}$ (mass%) of the content of Mo, content of P, content of V, content of Zr, content of Ti, and content of Ba obtained by the EDS surface analysis is determined for each of the measurement regions 21. The arithmetic average value of the determined five total contents $T_{20}$ is defined as the content (mass%) of the rust preventive pigment.

(3.2.3. Regarding mean particle size of rust preventive pigment)

As described above, the rust preventive pigment may be dissolved in the lower resin layer 20 or may be in particulate form in the lower resin layer 20. In a case where the lower resin layer 20 contains the rust preventive pigment in particulate form, in other words, in a case where at least some of the rust preventive pigment contained in the lower resin layer 20 is in particulate form, the mean particle size of the rust preventive pigment in particulate form is 1.00 μm or less. If the mean particle size of the rust preventive pigment in particulate form is more than 1.00 μm, it will not be possible to obtain sufficient visibility of the metal base material in the decorative metal sheet 1. Therefore, the mean particle size of the rust preventive pigment in particulate form is 1.00 μm or less.

A preferable upper limit of the mean particle size of the rust preventive pigment in particulate form is 0.90 μm, more preferably is 0.80 μm, further preferably is 0.60 μm, and further preferably is 0.50 μm.

A lower limit of the mean particle size of the rust preventive pigment in particulate form is not particularly limited. The lower limit of the mean particle size of the rust preventive pigment in particulate form is, for example, 0.10 μm. The mean particle size of the rust preventive pigment is preferably as small as possible. Note that, as described above, all of the rust preventive pigment contained in the lower resin layer 20 may be dissolved.

(3.2.4. Regarding method for measuring mean particle size of rust preventive pigment)

The term "particle size" of the rust preventive pigment in the present embodiment means the mean primary particle size of the rust preventive pigment present in the lower resin layer 20. In a case where the lower resin layer 20 contains the rust preventive pigment in particulate form, the mean particle size of the rust preventive pigment in particulate form is determined by the following method.

The decorative metal sheet 1 is cut in the thickness direction to prepare a test specimen that includes the upper resin layer 30, the lower resin layer 20, and the metallic substrate 10, and also includes the surface of the upper resin layer 30. A cross section of the test specimen perpendicular to the surface of the upper resin layer 30 is adopted as the observation surface. After embedding the test specimen in resin, the observation surface of the test specimen is mirror-polished.

On the observation surface, an arbitrary observation region which includes at least the surface of the upper resin layer 30, the lower resin layer 20, and a part of the surface of the metallic substrate 10 is observed at a magnification of ×5000 using an SEM-EDS apparatus to obtain an observation image (backscattered electron image). The size of the observation region is to be 40 μm × 40 μm.

In the observation region, the interface between the upper resin layer 30 and the lower resin layer 20 is then identified. The interface between the upper resin layer 30 and the lower resin layer 20 can be easily identified based on contrast. The upper resin layer 30 and the lower resin layer 20 are identified by the above method.

Measurement regions at an arbitrary 10 locations on the lower resin layer 20 on the observation surface are observed at a magnification of × 10000 using an SEM-EDS apparatus to obtain observation images. The size of each observation image (size of each measurement region) is to be 10 μm × 10 μm.

A maximum of up to five arbitrary rust preventive pigment particles are selected from among the multiple rust preventive pigment particles present in each measurement region. In each measurement region, the particles can be easily identified based on contrast. The identified particles are subjected to element concentration analysis (point analysis). In the point analysis, the accelerating voltage is set to 15 kV, and quantitative analysis of elements (total elemental analysis) is performed. If it is found as a result of the analysis that the relevant particle contains one or more types of element selected from a group consisting of Mo, P, V, Zr, Ti, and Ba, the relevant particle is identified as a rust preventive pigment particle. Among the identified rust preventive pigment particles, five rust preventive pigment particles are selected. The major axis and minor axis of each of the selected rust preventive pigment particles is measured. Specifically, in the measurement region, two line segments which are parallel to each other and which are each tangential to the outer circumference of the rust preventive pigment particle are prepared. The maximum distance between the two line segments is defined as the major axis of the relevant rust preventive pigment particle. Furthermore, the distance between two line segments which are each parallel to the major axis and which are each tangential to the outer circumference of the rust preventive pigment particle is defined as the minor axis of the relevant rust preventive pigment particle.

In each measurement region, if the number of rust preventive pigment particles present in the measurement region is less than five, the major axis and the minor axis of all the rust preventive pigment particles in the relevant measurement region is measured. The arithmetic average value of the major axes and the arithmetic average value of the minor axes of all the rust preventive pigment particles selected in the measurement regions at the 10 locations are determined. A value to the second decimal place obtained by rounding off the obtained numerical value of the arithmetic average value of the major axes at the third decimal place is defined as the mean major axis (μm). A value to the second decimal place obtained by rounding off the obtained numerical value of the arithmetic average value of the minor axes at the third decimal place is defined as the mean minor axis (μm). The arithmetic average value of the obtained mean major axis and mean minor axis is adopted as the mean particle size (μm) of the rust preventive pigment in particulate form. A value to the second decimal place obtained by rounding off the obtained numerical value of the arithmetic average value at the third decimal place is defined as the mean particle size (μm).

Note that, if the presence of the rust preventive pigment in particulate form is not confirmed in all of the measurement regions, it is determined that all of the rust preventive pigment is dissolved in the lower resin layer 20.

The lower resin layer 20 constituted as described above has translucency. Here, the phrase "has translucency" means that when the decorative metal sheet 1 including the lower resin layer 20 is placed in an environment equivalent to sunlight in the morning on a clear day (illuminance of about 65000 lux), the metal base material of the surface 10S of the metallic substrate 10 is visible.

[3.3. Regarding coloring pigment]

The lower resin layer 20 may further contain a coloring pigment.

The coloring pigment is a fine particle (powder) that is an insoluble particle in water and oil. By containing a coloring pigment in the lower resin layer 20, the lower resin layer 20 will be colored. Coloring pigments are well-known, and the coloring pigment may be an inorganic pigment or may be an organic pigment. The coloring pigment is a chromatic color pigment. The term "chromatic color" means a color that has the attributes of hue, lightness, and chroma.

Preferably, the lower resin layer 20 contains a coloring pigment, and the upper resin layer 30 does not contain a coloring pigment. As described above, the upper resin layer 30 has an action that suppresses the permeation of chemicals or corrosion factors. If the upper resin layer 30 contains a coloring pigment, chemicals or corrosion factors may permeate from the outside to the interface between the coloring pigment and the second organic resin. If the lower resin layer 20 contains a coloring pigment, the design properties associated with the coloring pigment will be easily exhibited.

In a case where the coloring pigment is an inorganic pigment, the coloring pigment is, for example, one or more types selected from a group consisting of neutralization-precipitated pigments (sulfates, carbonates and the like) and calcined pigments (metallic sulfides, metallic oxides, polyvalent metal complex oxides and the like). In a case where the coloring pigment is an organic pigment, the coloring pigment is, for example, one or more types selected from a group consisting of chlorine pigments, azo pigments (soluble azo lake pigments, insoluble azo pigments and the like), acid condensation pigments, polycyclic pigments (phthalocyanine-based pigments, indigo-based pigments, quinacridone-based pigments, anthraquinone-based pigments and the like), and metal complex pigments (azo chelate pigments, transition metal complex pigments and the like).

The color of the coloring pigment is not particularly limited. The coloring pigment is, for example, a black pigment such as carbon black (C) or iron black ($Fe_3O_4$). However, the coloring pigment is not limited to a black pigment and may be a coloring pigment of a different color (white, purplish-red, yellow, greenish-blue, red, orange, green, blue, indigo blue, purple or the like).

The content of the coloring pigment in the lower resin layer 20 is, in percent by mass, 1.0 to 10.0%. When the content of the coloring pigment is 1.0% or more, the design properties of the decorative metal sheet 1 are enhanced. On the other hand, when the content of the coloring pigment is 10.0% or less, corrosion resistance of the lower resin layer 20 is sufficiently maintained.

<4. Regarding upper resin layer 30>

The upper resin layer 30 is formed as the uppermost layer on the lower resin layer 20. The upper resin layer 30 increases the chemical resistance of the decorative metal sheet 1. In addition, the upper resin layer 30 increases the visibility of the metal base material of the decorative metal sheet 1. The upper resin layer 30 contains second organic resin in an amount of 95% or more in percent by mass. The second organic resin is described hereunder.

[4.1. Regarding second organic resin]

The second organic resin provides excellent elongation, which is described later.

The second organic resin may be composed of an organic resin binder, or may be composed of an organic resin binder and organic resin particles. That is, the second organic resin is composed of an organic resin binder, and does not have to contain organic resin particles.

The organic resin binder functions as a binder, and mainly constitutes the film structure of the upper resin layer 30. The organic resin binder is composed of, for example, one or more types selected from a group consisting of well-known natural resin and well-known synthetic resin. The organic resin is composed of, for example, one or more types selected from a group consisting of epoxy-based resin, urethane-based resin, polyester-based resin, phenol-based resin, polyethersulfone-based resin, melamine-alkyd-based resin, acryl-based resin, polyamide-based resin, polyimide-based resin, silicone-based resin, polyvinyl acetate-based resin, polyolefin-based resin, polystyrene-based resin, vinyl chloride-based resin, and vinyl acetate-based resin.

Here, the term "Y-based resin" means resin in which Y is the main constituent. The phrase "Y is the main constituent" means that the content of Y is 50% by mass or more.

Preferably, the organic resin binder is, for example, one or more types selected from a group consisting of polyester-based resin, and urethane-based resin. Polyester-based resin and urethane-based resin have excellent elongation and chemical resistance.

The organic resin particles are also called wax. The second organic resin may contain organic resin particles or need not contain organic resin particles. That is, the organic resin particles are an optional component, and do not have to be contained in the upper resin layer 30. In a case where the upper resin layer 30 contains organic resin particles, a preferable content of the organic resin particles in the upper resin layer 30 is 5% or less in percent by mass. In such a case,

the ductility of the upper resin layer 30 will be sufficiently maintained.

The organic resin particles are, for example, one or more types selected from a group consisting of urethane-based resin particles, acryl-based resin particles, hard polyethylene (PE)-based resin particles, polyethylene (PE)-based resin particles, polypropylene-based resin particles, and PTFE (polytetrafluoroethylene) particles.

Preferably the organic resin particles satisfy at least either one of the following (composition 1) and (composition 2).

(Composition 1) The hardness of the organic resin particles is higher than the hardness of the second organic resin.
(Composition 2) The surface free energy of the organic resin particles is lower than the surface free energy of the second organic resin, and therefore the coefficient of friction of the resin particles is lower than the coefficient of friction of the second organic resin.

In a case where the upper resin layer is formed by applying and drying an upper-layer resin chemical agent, in some cases it may not be possible to clearly distinguish between the organic resin binder and the organic resin particles in the second organic resin. However, if the second organic resin contains an excessive amount of organic resin particles, as described above, the ductility of the upper resin layer 30 will decrease and the crack area fraction after bending will be more than 10.0%.

(4.1.1. Regarding content of second organic resin in upper resin layer 30)

The content of the second organic resin in the upper resin layer 30 is 95% or more in percent by mass. That is, the upper resin layer 30 is substantially composed of the second organic resin. The content of the second organic resin in the upper resin layer 30 may be 100%. In a case where the second organic resin contains an organic resin binder and organic resin particles, the content of the second organic resin is the total content (mass%) of the organic resin binder and the organic resin particles.

If the content of the second organic resin in the upper resin layer 30 is 95% or more, the amount of components other than the second organic resin contained in the upper resin layer 30 will be sufficiently small. Therefore, permeation of chemicals and corrosion factors will be sufficiently suppressed.

A preferable lower limit of the content of the second organic resin is 97%, and more preferably is 98%. If the content of the second organic resin is 98% or more, corrosion resistance after bending will be further increased.

(4.1.2. Method for measuring content of second organic resin in upper resin layer 30)

The content of the second organic resin in the upper resin layer 30 is determined by the following method.

The decorative metal sheet 1 is cut in the thickness direction to prepare a test specimen that includes the upper resin layer 30, the lower resin layer 20, and the metallic substrate 10, and also includes the surface of the upper resin layer 30. A cross section of the test specimen perpendicular to the surface of the upper resin layer 30 is adopted as the observation surface. After embedding the test specimen in resin, the observation surface of the test specimen is mirror-polished.

On the observation surface, an arbitrary observation region which includes at least the surface of the upper resin layer 30, the lower resin layer 20, and a part of the surface of the metallic substrate 10 is observed at a magnification of ×5000 using a scanning electron microscope having a composition analysis function (SEM-EDS apparatus) to obtain an observation image (backscattered electron image). The size of the observation region is to be 40 $\mu$m × 40 $\mu$m.

In the observation region, the interface between the upper resin layer 30 and the lower resin layer 20 is then identified. The interface between the upper resin layer 30 and the lower resin layer 20 can be easily identified based on contrast. The upper resin layer 30 and the lower resin layer 20 are identified by the above method. After identifying the interface, the layer thickness is measured at an arbitrary five locations on the upper resin layer 30. The arithmetic average value of the obtained five layer thicknesses is defined as a layer thickness TH ($\mu$m) of the upper resin layer 30. The layer thickness TH is to be made a value to the first decimal place by rounding off the obtained numerical value at the second decimal place.

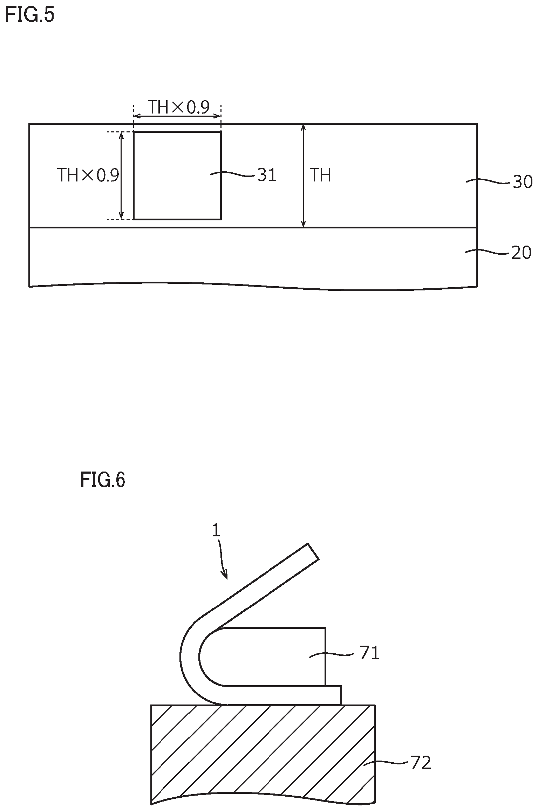

An SEM-EDS apparatus is used to perform element concentration analysis (EDS surface analysis) on an arbitrary measurement region within the upper resin layer 30 of the observation region. As illustrated in FIG. 5, the size of a measurement region 31 is to be a square with dimensions of the layer thickness TH × 0.9 $\mu$m in the thickness direction of the upper resin layer 30, and the layer thickness TH × 0.9 $\mu$m in the perpendicular direction to the thickness direction. As described above, the layer thickness TH is an arithmetic average value, and the layer thickness of the upper resin layer 30 is not uniform and may vary. Therefore, the position of the measurement region 31 is to be selected so that the entire measurement region 31 is included within the upper resin layer 30. Five measurement regions 31 are to be selected within the upper resin layer 30.

Each of the measurement regions 31 is subjected to EDS surface analysis. In the EDS surface analysis, the accelerating voltage is set to 15 kV, and total elemental analysis is performed. A total content $T_{30}$ (mass%) of the content of C and content of O that are obtained is determined for each measurement region. The arithmetic average value of the determined five total contents $T_{30}$ is defined as the content (mass%) of the second organic resin.

[4.2. Other addition agents of upper resin layer 30]

In addition to the second organic resin, the upper resin layer 30 may also contain, as an addition agent, one or more types selected from a group consisting of a low gloss agent (matting agent), a coloring pigment, a leveling agent, a rheology modifier, and an antifoaming agent. In the upper resin layer 30, the content of addition agents is 5% or less in percent by mass. Note that, the upper resin layer 30 substantially does not contain the rust preventive pigment. A preferable content of the rust preventive pigment in the upper resin layer 30 is less than 0.2%, more preferably is 0.1% or less, and further preferably is 0%.

Hereunder, the low gloss agent, the coloring pigment, the leveling agent, the rheology modifier, and the antifoaming agent are described.

(1) Regarding low gloss agent

The low gloss agent is also called a matting agent. The low gloss agent is in particulate form. By containing the low gloss agent in the upper resin layer 30, the roughness of the surface of the upper resin layer 30 will be increased. As a result, light will reflect diffusely off the surface of the upper resin layer 30. Therefore, the gloss of the upper resin layer 30 will decrease. The low gloss agent is, for example, silica ($SiO_2$) in particulate form.

(2) Coloring pigment

The coloring pigment is a fine particle (powder) that is an insoluble particle in water and oil. By containing a coloring pigment in the upper resin layer 30, the upper resin layer 30 will be colored. Coloring pigments are well-known, and the coloring pigment may be an inorganic pigment or may be an organic pigment. The coloring pigment is a chromatic color pigment. The term "chromatic color" means a color that has the attributes of hue, lightness, and chroma. The coloring pigment is, for example, aluminum flakes or the like.

(3) Regarding leveling agent

The leveling agent adjusts the surface tension of an upper-layer resin chemical agent (described later) that is a raw material of the upper resin layer 30, and thereby makes the surface of the upper-layer resin chemical agent smooth after the upper-layer resin chemical agent is applied. By this means, the occurrence of unevenness or irregularity on the surface of the upper resin layer 30 can be suppressed. The leveling agent is, for example, one or more types selected from a group consisting of a fluorine-based surfactant and a silicone-based surfactant.

(4) Regarding rheology modifier

The rheology modifier is also called a thickening agent. The rheology modifier adjusts the viscosity of the upper-layer resin chemical agent that is a raw material for the upper resin layer 30. By this means, adjustment of the coating mass of the upper-layer resin chemical agent is facilitated when applying the upper-layer resin chemical agent. The rheology modifier is, for example, an associative viscoelastic modifier, a polymeric viscoelastic modifier primarily composed of acrylic acid, or the like.

(5) Regarding antifoaming agent

The antifoaming agent suppresses formation of bubbles in the upper-layer resin chemical agent which is a slurry. The antifoaming agent is, for example, a silicone-based antifoaming agent, a non-silicone-based antifoaming agent, a mineral oil-based antifoaming agent, or a glycerin ester.

Preferably, the upper resin layer 30 is composed of the second organic resin and the low gloss agent. Preferably, the low gloss agent is silica.

[4.3. Regarding ductility of upper resin layer 30]

The upper resin layer 30 also exhibits excellent ductility. Specifically, when the sheet thickness of the decorative

metal sheet 1 is represented by t (mm), and bending by 180° with an inner bending radius of 2t is performed on the decorative metal sheet by bending defined in JIS Z 2248: 2022 so that the upper resin layer 30 side of the decorative metal sheet 1 curves convexly, on the surface of the upper resin layer 30 of a convex curved portion of the decorative metal sheet 1 after bending, in a surface region which is a square of 200 μm x 200 μm and in which a ridge line of the curved portion is located at a central position between two opposing sides of the square, a crack area fraction of the upper resin layer 30 is 10.0% or less.

More specifically, the ductility of the upper resin layer 30 is evaluated by the following method.

A sheet-like test specimen having dimensions of 20 mm × 40 mm × sheet thickness t is taken from the decorative metal sheet 1. Bending is performed using a bending apparatus by a winding bend method illustrated in FIG. 6 in accordance with JIS Z 2248: 2022. Referring to FIG. 6, the bending apparatus includes a mold 71 and a base 72. The tip of the mold 71 is curved with a curvature radius of 2t.

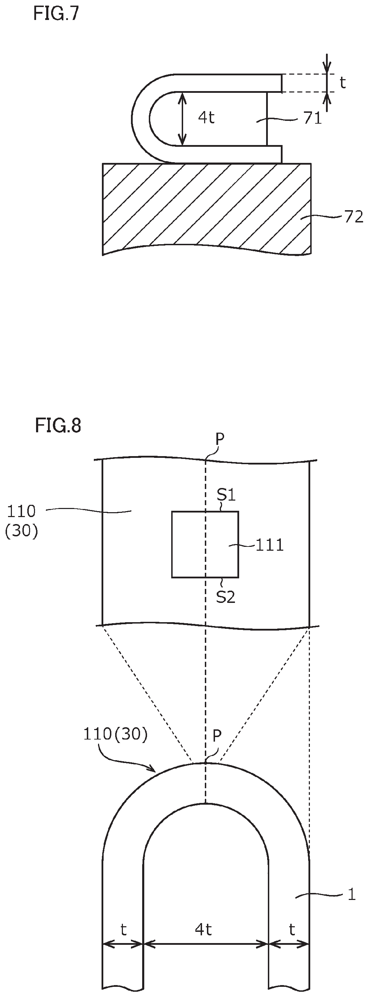

The sheet-like test specimen 1 is placed on the base 72, and the sheet-like test specimen 1 is clamped between the mold 71 and the base 72. Thereafter, the sheet-like test specimen 1 is subjected to bending. At such time, the sheet-like test specimen is bent in the longitudinal direction of the sheet-like test specimen, and the bending is performed so that the upper resin layer 30 side of the sheet-like test specimen 1 curves convexly. Then, as illustrated in FIG. 7, 180° bending is performed with an inner bending radius of 2t (inner bending diameter of 4t).

FIG. 8 is a diagram showing a state of the decorative metal sheet (sheet-like test specimen) that underwent 180° bending obtained as illustrated in FIG. 7, as seen in side view and as seen in plan view. Referring to FIG. 8, on the surface of the upper resin layer 30 of a convex curved portion 110 of the sheet-like test specimen 1 on which the 180° bending has been completed, a surface region 111 which includes at the center thereof a ridge line P corresponding to the apex of the curved portion 110 is selected. The surface region 111 is a square of 200 μm × 200 μm, and the ridge line P of the curved portion 110 is located at the central position between two opposing sides S1 and S2 of the square.

The selected surface region 111 is observed with a scanning electron microscope (SEM) at a magnification of ×500, and a photographic image (secondary electron image) of the surface region 111 is generated. That is, the surface region 111 is a region that corresponds to the surface of the upper resin layer 30.

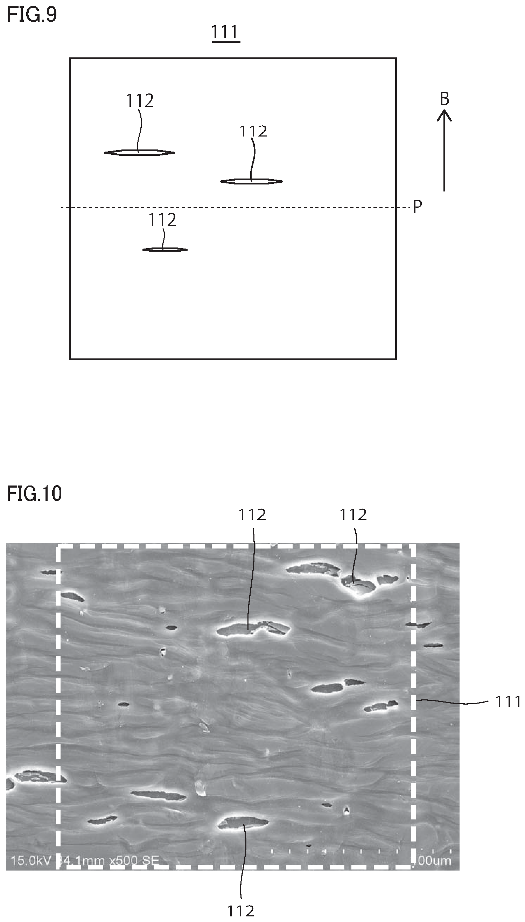

FIG. 9 is a schematic diagram of the surface region 111. Referring to FIG. 9, when cracks 112 occur in the surface region 111, each crack 112 extends along the ridge line P of the curved portion 110, and opens in a bending direction B. Therefore, in a case where the cracks 112 occur in the surface region 111, the total area fraction of the cracks 112 is determined. In the surface region 111, the sum of the regions surrounded by the edges of the openings of the respective cracks 112 is defined as the total area of the cracks 112 in the surface region 111. As shown in FIG. 10 to FIG. 12, the edges of the openings of the cracks 112 can be clearly identified in a secondary electron image. Specifically, the brightness inside the openings of the cracks 112 is low, and the brightness at the edges of the openings is high. The edges of the openings are identified as white lines. Therefore, the regions surrounded by the edges of the openings of the cracks 112 can be easily identified. The crack area fraction is calculated as follows based on the area of the surface region 111 and the total area of the cracks 112.

Crack area fraction (%) = total area of cracks 112/area of surface region 111 × 100

The crack area fraction is to be made a value to the first decimal place by rounding off the obtained value at the second decimal place.

In a case where the crack area fraction is 10.0% or less, it is determined that the upper resin layer 30 has excellent ductility. On the other hand, in a case where the crack area fraction is more than 10.0%, it is determined that the upper resin layer 30 does not have sufficient ductility. Note that, the area of each crack 112 can be determined using a well-known image processing application.

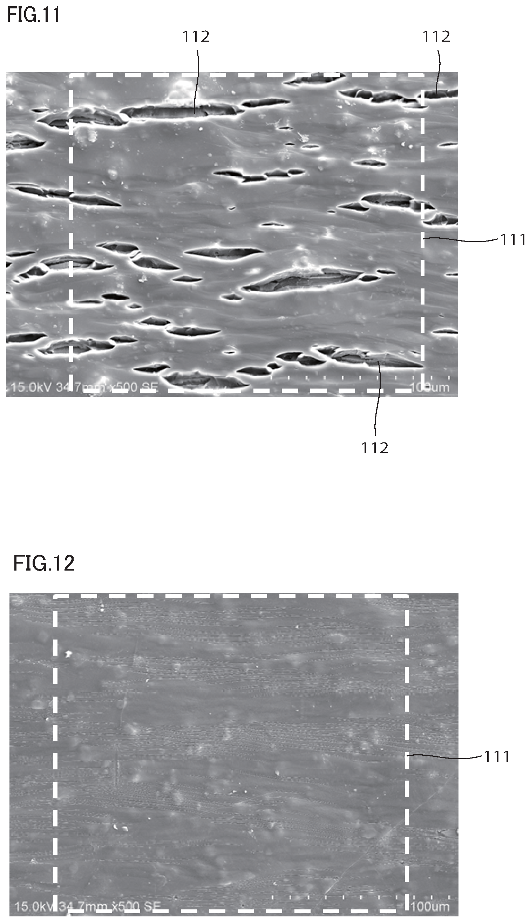

FIG. 10 and FIG. 11 are secondary electron images that show examples of the surface region 111 in a case where the upper resin layer 30 does not have sufficient ductility. FIG. 12 is a secondary electron image that shows an example of the surface region 111 of the decorative metal sheet 1 of the present embodiment.

In FIG. 10 and FIG. 11, a plurality of cracks 112 have occurred inside the surface region 111 surrounded by a white dashed line. In this case, a black colored region on the inner side of the white edge of the opening of each crack 112 in the surface region 111 is defined as the area of the relevant crack 112. In FIG. 10 and FIG. 11, the crack area fraction is more than 10.0%. Specifically, the crack area fraction in FIG. 10 is 10.2%, and the crack area fraction in FIG. 11 is 34.7%. Therefore, in these examples the upper resin layer 30 does not have sufficient ductility.

On the other hand, in FIG. 12, no cracks are observed in the surface region 111, and the crack area fraction is 10.0% or less. Therefore, the upper resin layer 30 of the decorative metal sheet 1 in FIG. 12 has excellent ductility.

In the decorative metal sheet 1 of the present embodiment, the upper resin layer 30 has excellent ductility according to the above evaluation method. Therefore, the decorative metal sheet 1 not only has excellent corrosion resistance and excellent chemical resistance, but also maintains excellent corrosion resistance even when subjected to

bending. This point is described hereunder.

When the decorative metal sheet 1 is subjected to bending, the metallic substrate 10 plastically deforms due to bending stress. At such time, bending stress is also applied to the lower resin layer 20 formed on the metallic substrate 10, and the upper resin layer 30. As described above, the upper resin layer 30 has excellent ductility. Therefore, even when subjected to bending, the cracks 112 that are attributable to bending stress do not easily occur in the upper resin layer 30. Therefore, even after bending, the upper resin layer 30 can sufficiently suppress the permeation of chemicals or corrosion factors through the cracks 112. As a result, excellent corrosion resistance is maintained even after bending.

In the decorative metal sheet 1 of the present embodiment, even if cracks occur in the outer layer of the metallic substrate 10 or the lower resin layer 20 due to bending, the occurrence of the cracks 112 in the upper resin layer 30 is suppressed. Therefore, the upper resin layer 30 can sufficiently suppress the permeation of chemicals or corrosion factors from outside to the lower resin layer 20 or the plating layer 102.

A preferable upper limit of the crack area fraction is 9.0%, more preferably is 8.0%, and further preferably is 7.0%.

A small crack area fraction is preferable. Therefore, the most preferable crack area fraction is 0.0%.

Note that, even when the content of the second organic resin in the upper resin layer 30 is 95% or more, in some cases the crack area fraction after bending may be more than 10.0%. The crack area fraction is affected by the type of the organic resin binder and/or organic resin particles of the second organic resin, the average molecular weight of the organic resin binder, and other factors. In other words, although making the content of the second organic resin 95% or more is a necessary condition for achieving a crack area fraction of 10.0% or less, this condition alone is not sufficient. Among the factors that determine the crack area fraction, the factors other than the content of the second organic resin are very complicated and such factors are extremely difficult to identify. Therefore, in the decorative metal sheet of the present embodiment, the aforementioned crack area fraction is adopted for the structure of the upper resin layer 30.

Note that, the upper resin layer 30 constituted as described above has translucency. Here, the phrase "has translucency" means that when the decorative metal sheet 1 including the lower resin layer 20 is placed in an environment equivalent to sunlight in the morning on a clear day (illuminance of about 65000 lux), the metal base material of the surface 10S of the metallic substrate 10 is visible.

## <5. Preferable structure of lower resin layer 20 and upper resin layer 30>

### [5.1. Regarding preferable layer thickness TL of lower resin layer 20]

Preferably, the layer thickness TL (μm) of the lower resin layer 20 is 1.0 to 5.0 μm.

If the layer thickness TL of the lower resin layer 20 is 1.0 μm or more, the corrosion resistance exhibited by the lower resin layer 20 will increase further. On the other hand, if the layer thickness TL of the lower resin layer 20 is less than 5.0 μm, in the decorative metal sheet 1, the visibility of the metal base material of the metallic substrate 10 will increase.

A more preferable lower limit of the layer thickness TL is 1.2 μm, further preferably is 1.5 μm, and further preferably is 2.0 μm.

A preferable upper limit of the layer thickness TL is 4.5 μm, and more preferably is 4.0 μm.

### [5.2. Regarding preferable layer thickness TH of upper resin layer 30]

Preferably, the layer thickness TH (μm) of the upper resin layer 30 is 5.0 to 10.0 μm.

If the layer thickness TH of the upper resin layer 30 is 5.0 μm or more, chemical resistance will increase further. In addition, in a case where bending is performed, the occurrence of cracks due to elongation of the upper resin layer 30 can be further suppressed. On the other hand, if the layer thickness TH of the upper resin layer 30 is 10.0 μm or less, in the decorative metal sheet 1, the visibility of the metal base material of the metallic substrate 10 will increase.

A more preferable lower limit of the layer thickness TH is 5.2 μm, further preferably is 5.5 μm, and further preferably is 6.0 μm.

A preferable upper limit of the layer thickness TH is 9.5 μm, more preferably is 9.0 μm, further preferably is 8.5 μm, and further preferably is 8.0 μm.

### [5.3. Regarding total of layer thickness TL of lower resin layer 20 and layer thickness TH of upper resin layer 30]

A preferable total of the layer thickness TL of the lower resin layer 20 and the layer thickness TH of the upper resin layer 30 is 9.0 to 15.0 μm.

If the total of the layer thickness TL and the layer thickness TH is 9.0 μm or more, corrosion resistance and chemical resistance will increase further. On the other hand, if the total of the layer thickness TL and the layer thickness TH is 15.0 μm or less, in the decorative metal sheet 1, the visibility of the metal base material of the metallic substrate 10 will increase.

A preferable lower limit of the total of the layer thickness TL and the layer thickness TH is 9.5 μm, more preferably is 10.0 μm, and further preferably is 10.5 μm.

A preferable upper limit of the total of the layer thickness TL and the layer thickness TH is 14.5 μm, more preferably is 14.0 μm, and further preferably is 13.5 μm.

[5.4. Regarding method for measuring layer thickness TL of lower resin layer 20 and layer thickness TH of upper resin layer 30]

A method for measuring the layer thickness TL (μm) of the lower resin layer 20 and the layer thickness TH (μm) of the upper resin layer 30 is as follows.

The decorative metal sheet 1 is cut in the thickness direction to prepare a test specimen that includes the upper resin layer 30, the lower resin layer 20, and the metallic substrate 10, and also includes the surface of the upper resin layer 30. A cross section of the test specimen perpendicular to the surface of the upper resin layer 30 is adopted as the observation surface. After embedding the test specimen in resin, the observation surface of the test specimen is mirror-polished.

On the observation surface, an arbitrary visual field which includes at least the surface of the upper resin layer 30, the lower resin layer 20, and a part of the outer layer of the metallic substrate 10 is observed at a magnification of ×5000 using a scanning electron microscope (SEM) to obtain an observation image (backscattered electron image). The size of the visual field is to be 40 μm × 40 μm.

In the observation image, the interface between the upper resin layer 30 and the lower resin layer 20 is then identified. The interface between the upper resin layer 30 and the lower resin layer 20 can be easily identified based on contrast. After the interface is identified, the layer thickness is measured at an arbitrary five locations on the upper resin layer 30. The arithmetic average value of the five layer thicknesses that are obtained is defined as the layer thickness TH (μm) of the upper resin layer 30. The layer thickness TH is to be made a value to the first decimal place by rounding off the obtained numerical value at the second decimal place.

Similarly, the layer thickness is measured at an arbitrary five locations on the lower resin layer 20. The arithmetic average value of the five layer thicknesses that are obtained is defined as the layer thickness TL (μm) of the lower resin layer 20. The layer thickness TL is to be made a value to the first decimal place by rounding off the obtained numerical value at the second decimal place.

<6. Optional component in decorative metal sheet 1>

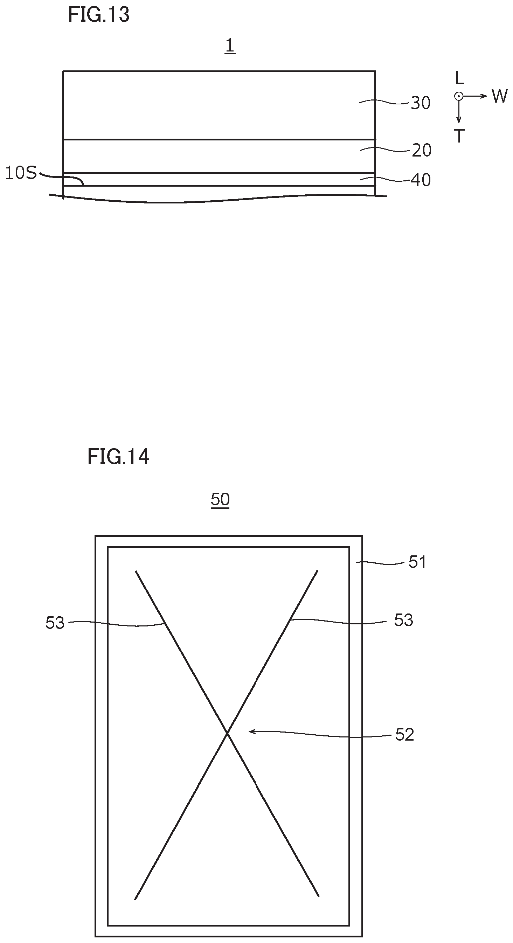

As illustrated in FIG. 13, the decorative metal sheet 1 may further include a chemical conversion coating 40 between the surface 10S of the metallic substrate 10 and the lower resin layer 20. That is, the chemical conversion coating 40 is an optional component, and does not have to be included. Hereunder, the chemical conversion coating 40 is described.

[6.1. Regarding chemical conversion coating 40]

The chemical conversion coating 40 further increases the corrosion resistance of the decorative metal sheet 1. In addition, the chemical conversion coating 40 increases adhesion between the surface 10S and the lower resin layer 20. The chemical conversion coating 40, for example, may have a well-known or publicly known composition. The chemical conversion coating 40, for example, contains an organosilicon compound, a specific inorganic compound containing one or more types of element among V, P, Zr, and Ti, and a fluorine compound.

(1) Regarding organosilicon compound

The organosilicon compound is a compound in which silicon (Si) is bonded to an organic group. The type of organosilicon compound is not particularly limited.

Preferably, the organosilicon compound is a silane coupling agent. A silane coupling agent has a reactive functional group and a hydrolyzable group. The reactive functional group of the silane coupling agent bonds with organic material (organic resin), and the hydrolyzable group bonds with an inorganic material. Thus, the silane coupling agent can increase the adhesion to the surface 10S while also increasing the adhesion to the lower resin layer 20.

(2) Regarding specific inorganic compound

The specific inorganic compound is a compound that contains one or more types of element selected from a group consisting of V, P, Zr, and Ti. The specific inorganic compound increases corrosion resistance of the decorative

metal sheet 1.

(2-1) Regarding V compound

A vanadium compound increases corrosion resistance. The vanadium compound is not particularly limited as long as it is a compound containing V.

The vanadium compound is, for example, one or more types selected from a group consisting of vanadium pentoxide $V_2O_5$, metavanadic acid $HVO_3$, ammonium metavanadate, sodium metavanadate, vanadium oxytrichloride $VOCl_3$, vanadium trioxide $V_2O_3$, vanadium dioxide $VO_2$, vanadium oxysulfate $VOSO_4$, vanadium oxyacetylacetonate $VO(OC(=CH_2)CH_2COCH_3)_2$, vanadium acetylacetonate $V(OC(=CH_2)CH_2COCH_3)_3$, and vanadium trichloride $VCl_3$. In addition, the vanadium compound may be a compound obtained by reducing a pentavalent vanadium compound to a tetravalent to divalent vanadium compound using an organic compound having at least one type of a functional group selected from a group consisting of a hydroxyl group, a carbonyl group, a carboxyl group, a primary to tertiary amino group, an amide group, a phosphate group, and a phosphonic acid group.

(2-2) Regarding P compound

A P compound markedly increases corrosion resistance. The P compound is, for example, one or more types selected from a group consisting of phosphoric acid, ammonium phosphate, potassium phosphate, sodium phosphate, and the like. Preferably the P compound is phosphoric acid. When phosphoric acid is used, corrosion resistance increases further.

(2-3) Zr compound

A Zr compound is a compound that contains Zr, such as Zr oxides, hydroxides, complex compounds, and salts with inorganic acids or organic acids. The Zr compound readily reacts with reactive functional groups. Therefore, the curing and crosslinking reaction of the Zr compound and the chemical conversion coating 40 are promoted, thereby increasing the denseness of the chemical conversion coating 40. As a result, corrosion resistance markedly increases.

The Zr compound is, for example, one or more types selected from a group consisting of zirconyl nitrate ($ZrO(NO_3)_2$), zirconyl acetate, zirconyl sulfate, ammonium zirconium carbonate $\{(NH_4)_2[Zr(CO_3)_2(OH)_2]\}$, and zirconium acetate.

(2-4) Ti compound

Similarly to the Zr compound, a Ti compound readily reacts with reactive functional groups. Therefore, the Ti compound cures the chemical conversion coating 40 and increases the denseness of the chemical conversion coating 40. As a result, corrosion resistance of the decorative metal sheet 1 markedly increases.

The Ti compound is a compound that contains Ti, such as Ti oxides, hydroxides, complex compounds, and salts with inorganic acids or organic acids. The Ti compound is, for example, one or more types selected from a group consisting of titanyl sulfate ($TiOSO_4$), titanium lactate, diisopropoxytitanium bisacetylacetone $\{(C_5H_7O_2)_2Ti[OCH(CH_3)_2]_2\}$, and a reaction product of lactic acid and titanium alkoxide.

(3) Regarding fluorine compound

A fluorine compound increases corrosion resistance of the chemical conversion coating 40. The fluorine compound is not particularly limited as long as it is a compound containing fluorine. The fluorine compound is, for example, one or more types selected from a group consisting of hydrofluoric acid, fluoroboric acid, fluorosilicic acid, fluorides of these, and complex fluoride salts of these.

Note that, the Zr compound and the fluorine compound may be combined. Specifically, the chemical conversion coating 40 may contain the Zr compound and the fluorine compound as separate compounds, or may contain a compound containing Zr and fluorine. For example, zirconium hydrofluoric acid acts as the Zr compound and also acts as the fluorine compound. Therefore, zirconium hydrofluoric acid contains the Zr compound and the fluorine compound. Further, the Ti compound and the fluorine compound may be combined. Specifically, the chemical conversion coating 40 may contain the Ti compound and the fluorine compound as separate compounds, or may contain a compound containing Ti and fluorine. For example, titanium hydrofluoric acid acts as the Ti compound and also acts as the fluorine compound. Therefore, titanium hydrofluoric acid contains the Ti compound and the fluorine compound.

<7. Advantageous effects of decorative metal sheet 1>

In the decorative metal sheet 1 composed as described above, excellent corrosion resistance and excellent chemical resistance are obtained by means of the lower resin layer 20 and the upper resin layer 30. In addition, in the decorative metal sheet 1 of the present embodiment, the upper resin layer 30 has excellent ductility. Therefore, when the decorative metal sheet 1 is subjected to bending, the cracks 112 that are attributable to bending stress do not easily occur in the upper resin layer 30. Therefore, even after being subjected to bending, the upper resin layer 30 can sufficiently suppress the permeation of chemicals or corrosion factors through the cracks 112. As a result, excellent corrosion resistance is maintained even after bending.

In the decorative metal sheet 1 of the present embodiment, even if cracks occurred in the plating layer 102 or the lower resin layer 20 due to bending, the occurrence of cracks in the upper resin layer 30 is suppressed. Therefore, the upper resin layer 30 can sufficiently suppress the permeation of chemicals or corrosion factors from outside to the lower resin layer 20 or the plating layer 102.

The decorative metal sheet 1 that exhibits the above advantageous effects can be widely applied to applications where corrosion resistance and chemical resistance are required and where bending is performed before being used. For example, the decorative metal sheet 1 is suitable for use in electrical appliances typified by dishwashers and washing machines and the like.

<8. Method for producing decorative metal sheet 1>

The decorative metal sheet 1 of the present embodiment can be produced, for example, by the following method. Hereunder, one example of a method for producing the decorative metal sheet 1 is described. One example of the method for producing the decorative metal sheet 1 includes the following processes.

(Process 1) Base metal sheet preparation process
(Process 2) Plating layer formation process
(Process 3) Texture formation process
(Process 4) Chemical conversion coating formation process
(Process 5) lower resin layer formation process
(Process 6) Upper resin layer formation process

Here, process 2 to process 4 are optional processes. That is, each of process 2 to process 4 may be performed as necessary. Each process is described hereunder.

[(Process 1) Base metal sheet preparation process]

In the base metal sheet preparation process, the base metal sheet 101 described above is prepared. In a case where the plating layer formation process that is the next process will not be performed, the base metal sheet 101 will serve as the metallic substrate 10. On the other hand, in a case where the plating layer formation process that is the next process will be performed, the base metal sheet 101 on which the plating layer 102 has been formed will serve as the metallic substrate 10.

[(Process 2) Plating layer formation process]

The plating layer formation process is an optional process. The plating layer formation process is performed in the case of forming the plating layer 102 on the base metal sheet 101. Therefore, in a case where the plating layer 102 is not to be formed on the base metal sheet 101, the plating layer formation process is not performed.

In the plating layer formation process, the plating layer 102 is formed on the metallic substrate 10 by an electroplating method or a hot-dip plating method. It suffices to adopt a well-known plating method for the electroplating method and the hot-dip plating method.

In a case where the plating layer 102 is a zinc-based plating layer, for example the plating layer 102 is formed by the following electrogalvanizing process or hot-dip galvanizing process.

(Electrogalvanizing process)

In the case of forming a zinc-based plating layer by an electrogalvanizing process, the electrogalvanizing process may be performed by a well-known method. In the present description, the term "electrogalvanizing process" also includes a zinc alloy electroplating process. It suffices to use a well-known electrogalvanizing solution as a plating solution used in

the electrogalvanizing process. The electrogalvanizing solution is, for example, a sulfate bath, a chloride bath, a zincate bath, a cyanide bath, a pyrophosphate bath, a boric acid bath, a citrate bath, another complex bath, or a combination of these baths. A zinc alloy electroplating solution contains, for example, in addition to Zn ions, one or more kinds of single ions or complex ions selected from a group consisting of Fe, Ni, Co, Cr and C. Further, an organic addition agent or the like may be added to the electrogalvanizing solution or the zinc alloy electroplating solution in order to obtain a desired effect such as a leveling effect or an increase in hardness.

(Hot-dip galvanizing process)

In the case of forming the plating layer 102 consisting of a zinc-based plating layer by a hot-dip galvanizing process, the hot-dip galvanizing process may be performed by a well-known method. It suffices to use a well-known plating bath as a plating bath used in the hot-dip galvanizing process. The plating bath, for example, contains Al with the balance being Zn and an impurity. The impurity is, for example, Fe. The plating bath may also contain, in addition to Zn, Al, and Fe, one or more types of element selected from a group consisting of Mg, Si, Ca, Y, La, Ce, Sn, Bi, In, Cr, Ti, Ni, Co, V, Nb, Cu, Mn, Sr, Sb, Pb, and B.

The metallic substrate 10 that includes the base metal sheet 101 and the plating layer 102 is formed by the above production process.

[(Process 3) Texture formation process]

The texture formation process is an optional process. The texture formation process is performed in the case of forming the texture TX on the surface 10S of the metallic substrate 10. In the texture formation process, the surface 10S is subjected to texturing to form the texture TX.

In a case where the texture TX is to be hairlines, well-known hairline processing is performed. Examples of hairline processing include a method that forms hairlines by abrading the surface with a well-known abrasive belt, a method that forms hairlines by abrading the surface with a well-known abrasive brush, and a method that forms hairlines by transferring a hairline shape by rolling with a roll to which a hairline shape has been imparted. The length, depth and frequency of the hairlines can be adjusted by adjusting the grain size of a well-known abrasive belt, the grain size of a well-known abrasive brush, or the surface shape of a roll. Note that, as the hairline processing, a method that forms hairlines by abrading the surface with an abrasive belt or an abrasive brush is preferable from the viewpoint of surface quality.

In a case where the texture TX is an uneven shape such as an embossment, dots, or a vibration finish, a well-known transfer method using a roll may be performed. Specifically, a roll on which the texture TX having an uneven shape such as an embossment is formed is prepared. The prepared roll is pressed against the surface 10S to transfer the uneven shape formed on the roll to the surface 10S. An uneven shape such as an embossment can be formed on the surface 10S by the above process.

[(Process 4) Chemical conversion coating formation process]

The chemical conversion coating formation process is an optional process. That is, the chemical conversion coating formation process need not be performed. In the chemical conversion coating formation process, the chemical conversion coating 40 is formed on the surface 10S. A production line used in the chemical conversion coating formation process includes a conveying line and, in order from upstream toward downstream of the conveying line, a coating material application apparatus and a baking furnace.

The metallic substrate 10 having the surface 10S is conveyed on the conveying line. The coating material application apparatus is arranged on the conveying line. The coating material application apparatus applies a chemical-conversion-coating chemical agent that is a raw material for the chemical conversion coating 40 to the surface 10S. The coating material application apparatus is, for example, a well-known coater. The well-known coater is, for example, a die coater, a roll coater, or a curtain coater.

The chemical-conversion-coating chemical agent contains the organosilicon compound, the specific inorganic compound containing one or more of V, P, Zr, and Ti, and the fluorine compound.

The baking furnace is arranged on the conveying line at a position downstream of the coating material application apparatus. The baking furnace dries and bakes the chemical-conversion-coating chemical agent applied to the surface 10S by the coating material application apparatus, to thereby form the chemical conversion coating 40. The peak metal temperature (PMT) (°C) in the baking furnace is set to, for example, 50 to 250°C.

[(Process 5) Lower resin layer formation process]

In the lower resin layer formation process, the lower resin layer 20 is formed on the surface of the surface 10S or

the chemical conversion coating 40. A production line used in the lower resin layer formation process includes a conveying line and, in order from upstream toward downstream of the conveying line, a coating material application apparatus and a baking furnace.

The metallic substrate 10 including the surface 10S or the chemical conversion coating 40 is conveyed on the conveying line. The coating material application apparatus is arranged on the conveying line. The coating material application apparatus applies a lower-layer resin chemical agent that is the raw material for the lower resin layer 20 to the surface 10S or the surface of the chemical conversion coating 40. The coating material application apparatus is, for example, a well-known coater.

The lower-layer resin chemical agent is a chemical agent that serves as the raw material for the lower resin layer 20. The lower-layer resin chemical agent contains the first organic resin and the rust preventive pigment.

The baking furnace is arranged on the conveying line at a position downstream of the coating material application apparatus. The baking furnace dries and bakes the lower-layer resin chemical agent applied to the surface 10S or the surface of the chemical conversion coating 40 by the coating material application apparatus, to thereby form the lower resin layer 20. The peak metal temperature PMT (°C) in the baking furnace is set to, for example, 150 to 250°C.

Note that, in process 5, the lower-layer resin chemical agent is prepared so that the content of the rust preventive pigment having a mean particle size of 1.00 μm or less is 0.2 to 30.0% in the lower resin layer 20 that is formed.

[(Process 6) Upper resin layer formation process]

In the upper resin layer formation process, the upper resin layer 30 is formed on the surface of the lower resin layer 20. A production line used in the upper resin layer formation process includes a conveying line and, in order from upstream toward downstream of the conveying line, a coating material application apparatus and a baking furnace.

The metallic substrate 10 including the lower resin layer 20 is conveyed on the conveying line. The coating material application apparatus is arranged on the conveying line. The coating material application apparatus applies an upper-layer resin chemical agent that is the raw material for the upper resin layer 30 to the surface of the lower resin layer 20. The coating material application apparatus is, for example, a well-known coater.

The upper-layer resin chemical agent is a chemical agent that serves as the raw material for the upper resin layer 30. The upper-layer resin chemical agent contains organic resin.

The baking furnace is arranged on the conveying line at a position downstream of the coating material application apparatus. The baking furnace dries and bakes the upper-layer resin chemical agent applied to the surface of the lower resin layer 20 by the coating material application apparatus, to thereby form the upper resin layer 30. The peak metal temperature PMT (°C) in the baking furnace is set to, for example, 150 to 250°C.

Note that, in process 6, the upper-layer resin chemical agent is prepared so that, in the upper resin layer 30 that is formed, the content of the second organic resin is 95% or more in percent by mass and the crack area fraction after bending is 10.0% or less.

The decorative metal sheet 1 of the present embodiment is produced by the production process described above. Note that, the decorative metal sheet 1 may also be produced by another production method. The production method described above is one example of the method for producing the decorative metal sheet 1.

EXAMPLES

Hereunder, advantageous effects of the decorative metal sheet 1 of the present embodiment are described more specifically by way of examples.

[Regarding production of decorative metal sheets]

Decorative metal sheets with the test numbers shown in Table 1 (Table 1A, Table 1B, and Table 1C) were produced by the following production process.

[Table 1A]

TABLE 1A

| Test Number | Metallic Substrate | | | Chemical Conversion Coating |
|---|---|---|---|---|
| | Base Metal Sheet | Plating Layer | Texture | |
| 1 | Steel Sheet | None | None | None |

(continued)

| Test Number | Metallic Substrate | | | Chemical Conversion Coating |
|---|---|---|---|---|
| | Base Metal Sheet | Plating Layer | Texture | |
| 2 | Steel Sheet | None | None | Yes |
| 3 | Steel Sheet | None | Hairlines | Yes |
| 4 | Steel Sheet | None | None | None |
| 5 | Steel Sheet | None | Hairlines | None |
| 6 | Steel Sheet | Zn-Ni Plating | None | None |
| 7 | Steel Sheet | Zn-Ni Plating | None | Yes |
| 8 | Steel Sheet | Zn-Ni Plating | Embossment | Yes |
| 9 | Steel Sheet | Zn-Ni Plating | None | Yes |
| 10 | Steel Sheet | Zn-Ni Plating | Hairlines | Yes |
| 11 | Steel Sheet | Zn-Ni Plating | Hairlines | Yes |
| 12 | Steel Sheet | Zn-Ni Plating | Hairlines | Yes |
| 13 | Steel Sheet | Zn-Ni Plating | Hairlines | Yes |
| 14 | Steel Sheet | Zn-Ni Plating | Hairlines | Yes |
| 15 | Steel Sheet | Zn-Ni Plating | Hairlines | Yes |
| 16 | Steel Sheet | Zn-Ni Plating | Hairlines | Yes |
| 17 | Steel Sheet | Zn-Ni Plating | Hairlines | Yes |
| 18 | Steel Sheet | Zn-Ni Plating | Hairlines | Yes |
| 19 | Steel Sheet | Zn-Ni Plating | Hairlines | Yes |
| 20 | Steel Sheet | Zn-Ni Plating | Hairlines | Yes |
| 21 | Steel Sheet | Zn-Ni Plating | Hairlines | Yes |
| 22 | Steel Sheet | Zn-Ni Plating | Hairlines | Yes |
| 23 | Steel Sheet | Zn-Ni Plating | None | Yes |
| 24 | Steel Sheet | Zn-Ni Plating | Hairlines | Yes |
| 25 | Steel Sheet | Zn-Ni Plating | Hairlines | Yes |
| 26 | Steel Sheet | Zn-Ni Plating | Hairlines | Yes |
| 27 | Steel Sheet | Zn-Ni Plating | Hairlines | Yes |
| 28 | Steel Sheet | Zn-Mg-Al Plating | Hairlines | Yes |
| 29 | Steel Sheet | Zn-Ni Plating | Hairlines | Yes |
| 30 | Steel Sheet | Zn-Ni Plating | Hairlines | Yes |
| 31 | Steel Sheet | Zn-Ni Plating | Hairlines | Yes |
| 32 | Steel Sheet | Zn-Ni Plating | Hairlines | Yes |
| 33 | Steel Sheet | Zn-Ni Plating | Hairlines | Yes |
| 34 | Steel Sheet | Zn-Ni Plating | Hairlines | Yes |
| 35 | Steel Sheet | Zn-Ni Plating | Hairlines | Yes |
| 36 | Steel Sheet | Zn-Ni Plating | Hairlines | Yes |
| 37 | Steel Sheet | Zn-Ni Plating | Hairlines | Yes |
| 38 | Steel Sheet | Zn-Ni Plating | Hairlines | Yes |

[Table 1B]

TABLE 1B

| Test Number | Lower Resin Layer | | | | |
|---|---|---|---|---|---|
| | First Organic Resin | Rust Preventive Pigment | | | TL (μm) |
| | Type | Type | Mean Particle Size (μm) | Content (mass%) | |
| 1 | Urethane | Mo | - | 0.5 | 1.5 |
| 2 | Urethane | Zr | ≤0.05 | 0.5 | 1.5 |
| 3 | Urethane | Zr | ≤0.05 | 0.5 | 1.5 |
| 4 | Urethane | V | - | 0.5 | 1.5 |
| 5 | Urethane | V | - | 0.5 | 1.5 |
| 6 | Urethane | Ti | - | 0.5 | 1.5 |
| 7 | Urethane | Ti. P | ≤0.05 | 1.5 | 1.5 |
| 8 | Polyester | Zr | ≤0.05 | 0.5 | 1.5 |
| 9 | Polyester | Zr | ≤0.05 | 0.5 | 1.5 |
| 10 | Polyester | Zr | ≤0.05 | 0.5 | 1.5 |
| 11 | Urethane | Zr. P | ≤0.05 | 1.3 | 1.5 |
| 12 | Urethane | Zr | ≤0.05 | 0.5 | 1.5 |
| 13 | Polyester | Ba | 0.10 | 25.0 | 1.5 |
| 14 | Urethane | Ba. P | 0.50 | 21.0 | 1.5 |
| 15 | Urethane | V. P | ≤0.05 | 3.5 | 1.5 |
| 16 | Urethane | Ba. Zr | 0.50 | 15.5 | 4.5 |
| 17 | Urethane | V | - | 0.5 | 1.5 |
| 18 | Urethane | Zr | ≤0.05 | 0.5 | 4.0 |
| 19 | Polyester | Ba | 0.10 | 29.0 | 1.3 |
| 20 | Polyester | Zr | ≤0.05 | 0.3 | 2.5 |
| 21 | Urethane | Zr. P | ≤0.05 | 1.5 | 0.5 |
| 22 | Urethane | Zr. P | ≤0.05 | 1.5 | 4.5 |
| 23 | Urethane | Zr. P | ≤0.05 | 1.5 | 1.5 |
| 24 | Polyester | Zr | ≤0.05 | 10.0 | 6.0 |
| 25 | Urethane | Zr | ≤0.05 | 0.5 | 1.5 |
| 26 | Urethane | Zr | ≤0.05 | 0.5 | 1.5 |
| 27 | Urethane | Zr | ≤0.05 | 0.5 | 1.5 |
| 28 | Urethane | Zr | ≤0.05 | 0.5 | 1.5 |
| 29 | - | - | - | 0.0 | 0.0 |
| 30 | Urethane | - | - | 0.0 | 1.5 |
| 31 | Urethane | Zr | ≤0.05 | 0.5 | 1.5 |
| 32 | Urethane | Zr | ≤0.05 | 0.5 | 1.5 |
| 33 | Urethane | Ba | 1.50 | 10.0 | 1.5 |
| 34 | Urethane | Ti | 3.00 | 20.0 | 1.5 |

(continued)

| Test Number | Lower Resin Layer | | | | |
|---|---|---|---|---|---|
| | First Organic Resin | Rust Preventive Pigment | | | TL (μm) |
| | Type | Type | Mean Particle Size (μm) | Content (mass%) | |
| 35 | Polyester | Ti | 0.10 | 35.0 | 1.5 |
| 36 | - | - | - | 0.0 | 0.0 |
| 37 | Urethane | Zr | ≤0.05 | 0.5 | 1.5 |
| 38 | Urethane | Zr | ≤0.05 | 0.5 | 1.5 |

[Table 1C]

TABLE 1C

| Test Number | Upper Resin Layer | | | | | | | TL+TH (μm) |
|---|---|---|---|---|---|---|---|---|
| | Second Organic Resin | | | Other Addition Agent | | TH(μm) | Crack Area Fraction (%) | |
| | Organic Resin Binder | Organic Resin Particles | Content (mass%) | Type | Content (mass%) | | | |
| 1 | Polyester | - | 100 | - | - | 8.0 | 0.0 | 9.5 |
| 2 | Polyester | - | 98 | Silica | 2 | 8.0 | 0.0 | 9.5 |
| 3 | Polyester | - | 98 | Aluminum Flakes | 2 | 8.0 | 0.0 | 9.5 |
| 4 | Urethane | - | 98 | Silica | 2 | 8.0 | 0.0 | 9.5 |
| 5 | Polyester | - | 98 | Silica | 2 | 8.0 | 0.0 | 9.5 |
| 6 | Polyester | - | 98 | Silica | 2 | 8.0 | 0.0 | 9.5 |
| 7 | Polyester | Polyethylene | 100 | - | 0 | 8.0 | 0.0 | 9.5 |
| 8 | Polyester | - | 98 | Silica | 2 | 8.0 | 0.0 | 9.5 |
| 9 | Polyester | - | 98 | Silica | 2 | 8.0 | 0.0 | 9.5 |
| 10 | Polyester | - | 98 | Silica | 2 | 8.0 | 0.0 | 9.5 |
| 11 | Urethane | - | 100 | - | 0 | 8.0 | 0.0 | 9.5 |
| 12 | Polyester | - | 98 | Silica | 2 | 8.0 | 0.0 | 9.5 |
| 13 | Polyester | - | 98 | Silica | 2 | 8.0 | 0.0 | 9.5 |
| 14 | Urethane | - | 98 | Silica | 2 | 8.0 | 0.0 | 9.5 |
| 15 | Polyester | - | 98 | Silica | 2 | 8.0 | 0.0 | 9.5 |
| 16 | Polyester | - | 98 | Silica | 2 | 9.5 | 0.0 | 14.0 |
| 17 | Polyester | - | 98 | Aluminum Flakes | 2 | 8.0 | 0.0 | 9.5 |
| 18 | Polyester | - | 98 | Silica | 2 | 5.5 | 0.0 | 9.5 |
| 19 | Polyester | - | 98 | Silica | 2 | 8.0 | 2.0 | 9.3 |
| 20 | Polyester | - | 98 | Silica | 2 | 8.0 | 0.0 | 10.5 |
| 21 | Polyester | - | 98 | Silica | 2 | 8.0 | 0.0 | 8.5 |
| 22 | Polyester | - | 98 | Silica | 2 | 4.0 | 0.0 | 8.5 |
| 23 | Polyester | - | 98 | Silica | 2 | 8.0 | 0.0 | 9.5 |

(continued)

| Test Number | Upper Resin Layer | | | | | | | TL+TH (μm) |
|---|---|---|---|---|---|---|---|---|
| | Second Organic Resin | | | Other Addition Agent | | TH(μm) | Crack Area Fraction (%) | |
| | Organic Resin Binder | Organic Resin Particles | Content (mass%) | Type | Content (mass%) | | | |
| 24 | Polyester | - | 98 | Silica | 2 | 11.0 | 0.0 | 17.0 |
| 25 | Polyester | - | 95 | Silica | 5 | 8.0 | 9.8 | 9.5 |
| 26 | Polyester | - | 97 | Silica | 3 | 8.0 | 5.0 | 9.5 |
| 27 | Polyester | - | 98 | Silica | 2 | 7.0 | 0.0 | 8.5 |
| 28 | Polyester | - | 98 | Silica | 2 | 8.0 | 0.0 | 9.5 |
| 29 | Polyester | - | 98 | Silica | 2 | 8.0 | 0.0 | 8.0 |
| 30 | Polyester | - | 98 | Silica | 2 | 8.0 | 0.0 | 9.5 |
| 31 | - | - | - | - | - | 0.0 | - | 1.5 |
| 32 | Polyester | - | 90 | Silica | 10 | 8.0 | 20.0 | 9.5 |
| 33 | Polyester | - | 98 | Silica | 2 | 8.0 | 0.0 | 9.5 |
| 34 | Polyester | - | 98 | Silica | 2 | 8.0 | 0.0 | 9.5 |
| 35 | Polyester | - | 98 | Silica | 2 | 8.0 | 0.0 | 9.5 |
| 36 | - | - | - | - | - | 0.0 | - | 0.0 |
| 37 | Polyester | - | 92 | Silica | 8 | 8.0 | 15.0 | 9.5 |
| 38 | Acryl | - | 97 | Silica | 3 | 8.0 | 14.0 | 9.5 |

[Base metal sheet preparation process]

Base metal sheets of the metal types described in the column "Base Metal Sheet" in Table 1 were prepared. The term "Steel Sheet" in the column "Base Metal Sheet" in Table 1 means that the base metal sheet was a steel sheet. In the present examples, in each test number, a steel sheet having a chemical composition containing, in percent by mass, C: 0.05%, Si: 0.001%, Mn: 0.15%, P: 0.010%, S: 0.010%, and sol. Al: 0.040%, with the balance being Fe and impurities, was used as the base metal sheet. The thickness of the base metal sheet was 0.6 mm.

[Plating layer formation process]

In Test Nos. 6 to 38, a plating layer was formed on the base metal sheet. Specifically, in these test numbers, a Zn-Ni plating layer (zinc-based plating layer) or a Zn-Mg-Al plating layer (zinc-based plating layer) was formed as a plating layer by a well-known electroplating method (described as "Zn-Ni Plating" or "Zn-Mg-Al Plating" in the column "Plating Layer" in Table 1A). The coating mass of the Zn-Ni plating layer was 35 g/m$^2$, and the coating mass of the Zn-Mg-Al plating layer was 60 g/m$^2$. The chemical composition of each plating layer was measured by the method described above in the section [2.3. Method for measuring chemical composition of plating layer 102]. As a result, in each of the test numbers in which a Zn-Ni plating layer was formed, the Zn-Ni plating layer had a chemical composition containing 10.0 to 15.0% in percent by mass of Ni with the balance being Zn. Further, in the test number in which a Zn-Mg-Al plating layer was formed, the Zn-Mg-Al plating layer had a chemical composition containing, in percent by mass, 3.0% of Mg and 11.0% of Al, with the balance being Zn.

A texture was formed on the surface of the metallic substrate of Test Nos. 3, 5, 8, 10 to 22, and 24 to 38. The term "Hairlines" in the column "Texture" in Table 1A means that hairlines were formed as a texture. The term "Embossment" means that an embossment was formed as a texture. In the hairline processing, the hairlines were formed using an abrasive brush. The embossment was formed on the plating layer using a roll.

[Chemical conversion coating formation process]

In Test Nos. 2, 3, and 7 to 38, a chemical conversion coating was formed on the metallic substrate. The chemical

composition of the chemical-conversion-coating chemical agent in each of these test numbers was a chemical composition containing, in percent by mass, a vanadium compound: 2%, a P compound: 1%, an organosilicon compound: 2%, and a fluorine compound: 0.5%, with the balance being water.

[Lower resin layer formation process]

A lower resin layer described in the column "Lower Resin Layer" in Table 1B was formed on the metallic substrate of each test number. Specifically, a lower-layer resin chemical agent consisting of first organic resin and a rust preventive pigment of the types shown in Table 1B and a well-known solvent was applied onto the metallic substrate using a coater, and then dried in a baking furnace. The peak metal temperature PMT of the baking furnace was in the range of 150 to 250°C. The lower resin layer was formed by the above process.

The type of the first organic resin contained in the lower resin layer is shown in the column "Type" of the column "First Organic Resin" in Table 1B. "Mo" in the column "Rust Preventive Pigment" means molybdic acid (molybdate-based pigment). "P" means zinc phosphate (phosphate-based pigment). "V" means ammonium metavanadate (vanadium-based pigment). "Zr" means zirconium oxide (zirconium-based pigment). "Ti" means titanium hydrofluoric acid (titanium-based pigment). "Ba" means barium metaborate (barium-based pigment). The symbol "-" means that a rust preventive pigment was not contained.

Note that, the symbol "-" in the column "Type" of the column "First Organic Resin" indicates that a lower resin layer was not formed. That is, in Test Nos. 29 and 36 a lower resin layer was not formed.

[Upper resin layer formation process]

After the lower resin layer was formed, an upper resin layer described in the column " Upper resin layer " in Table 1C was formed on the surface of the lower resin layer. Specifically, an upper-layer resin chemical agent consisting of an organic resin binder described in the "Organic Resin Binder" column and organic resin particles described in the "Organic Resin Particles" column of the column "Second Organic Resin" in Table 1C, an addition agent described in the "Other Addition Agent" column, and a well-known solvent was applied onto the lower resin layer using a coater, and then dried in a baking furnace. The peak metal temperature PMT of the baking furnace was in the range of 150 to 250°C. The upper resin layer was formed by the above process.

The symbol "-" in the column "Organic Resin Particles" of the "Second Organic Resin" column in Table 1C means that organic resin particles were not contained. "Silica" in the column "Type" of the "Other Addition Agent" column means that silica (a low gloss agent) was contained as an addition agent. "Aluminum Flakes" means that aluminum flakes (coloring pigment) were contained as an addition agent. In the column "Other Addition Agent", "Content (mass%)" means the content (mass%) of the other addition agent when the total solid content excluding a solvent and the like in the upper-layer resin chemical agent is taken as 100%.

Note that, the symbol "-" in the column "Organic Resin Binder" of the "Second Organic Resin" column indicates that an upper resin layer was not formed. That is, in Test Nos. 31 and 36, an upper resin layer was not formed.

The decorative metal sheet of each test number was produced by the above production process.

[Evaluation tests]

The metal sheet of each test number was subjected to the following evaluation tests.

(Test 1) Test to measure content of rust preventive pigment
(Test 2) Test to measure mean particle size of rust preventive pigment in particulate form
(Test 3) Test to measure content of second organic resin in upper resin layer
(Test 4) Test to evaluate ductility of upper resin layer
(Test 5) Test to measure layer thicknesses TL and TH of lower resin layer and upper resin layer
(Test 6) Visibility evaluation test
(Test 7) Chemical resistance evaluation test
(Test 8) Crosscut corrosion resistance evaluation test
(Test 9) Bending corrosion resistance evaluation test

Each test is described hereunder.

[(Test 1) Test to measure content of rust preventive pigment]

The content (mass%) of the rust preventive pigment in the lower resin layer of each test number was determined

based on the method described above in the section (3.2.2. Regarding method for measuring content of rust preventive pigment in lower resin layer 20). The determined content of the rust preventive pigment is shown in the column "Content (mass%)" of the column "Rust Preventive Pigment" in Table 1B.

[(Test 2) Test to measure mean particle size of rust preventive pigment in particulate form]

The mean particle size (μm) of the rust preventive pigment in the lower resin layer of each test number was determined based on the method described above in the section (3.2.4. Regarding method for measuring mean particle size of rust preventive pigment). The determined mean particle size (μm) of the rust preventive pigment is shown in the column "Mean Particle Size (μm)" of the "Rust Preventive Pigment" column in Table 1B. In the column "Mean Particle Size (μm)", "≤0.05" means that the mean particle size was 0.05 μm or less. Further, the symbol "-" means that the rust preventive pigment was not present in particulate form. That is, the symbol "-" means that all of the rust preventive pigment had dissolved in the lower resin layer.

[(Test 3) Test to measure content of second organic resin in upper resin layer]

The content (mass%) of the second organic resin in the upper resin layer of each test number was determined based on the method described above in the section (4.1.2. Method for measuring content of second organic resin in upper resin layer 30). The determined content of the second organic resin is shown in the column "Content (mass%)" in the column "Second Organic Resin" in Table 1C.

[(Test 4) Test to evaluate ductility of upper resin layer]

Based on the evaluation method described above in the section [4.3. Regarding ductility of upper resin layer 30], the crack area fraction (%) after bending in the upper resin layer of the decorative metal sheet of each test number was determined, and the ductility of the upper resin layer was evaluated. The crack area fraction (%) determined by the ductility evaluation test is shown in the column "Crack Area Fraction (%)" in Table 1C.

[(Test 5) Test to measure layer thicknesses TL and TH of lower resin layer and upper resin layer]

Based on the method described above in the section [5.4. Regarding method for measuring layer thickness TL of lower resin layer 20 and layer thickness TH of upper resin layer 30], the layer thickness TL of the lower resin layer, the layer thickness TH of the upper resin layer, and the total of the layer thickness TL and the layer thickness TH were determined. The determined layer thickness TL (μm) is shown in the column "TL (μm)" in Table 1B. The determined layer thickness TH (μm) is shown in the column "TH (μm)" in Table 1C. The determined total of the layer thickness TL and the layer thickness TH is shown in the column "TL+TH (μm)" in Table 1C.

[(Test 6) Visibility evaluation test]

The visibility of the metal base material of the decorative metal sheet was evaluated by the following method.

The decorative metal sheet of each test number was placed in an environment equivalent to sunlight in the morning on a clear day (illuminance of about 65000 lux). Then, whether or not the metal base material of the surface of the metallic substrate was visible from the surface of the decorative metal sheet through the upper resin layer and the lower resin layer was confirmed. The visibility was evaluated as follows based on the number of people who judged that the metal base material was visible.

A: Ten people all judged that the metal base material was visible.
B: Seven people or more and less than ten people judged that the metal base material was visible.
C: Less than seven people judged that the metal base material was visible.

If the evaluation was A or B, it was evaluated that sufficient visibility was obtained. If the evaluation was C, it was evaluated that sufficient visibility was not obtained. The evaluation results are shown in the column "Visibility" in Table 2.

[Table 2]

TABLE 2

| Test Number | Visibility | Chemical Resistance | Corrosion Resistance | | Remarks |
|---|---|---|---|---|---|
| | | | Crosscut | Bent Portion | |
| 1 | A | A | B | B | Inventive Example of Present Invention |
| 2 | A | A | B | B | Inventive Example of Present Invention |
| 3 | A | A | B | B | Inventive Example of Present Invention |
| 4 | A | A | B | B | Inventive Example of Present Invention |
| 5 | A | A | B | B | Inventive Example of Present Invention |
| 6 | A | A | A | A | Inventive Example of Present Invention |
| 7 | A | A | A | A | Inventive Example of Present Invention |
| 8 | A | A | A | A | Inventive Example of Present Invention |
| 9 | A | A | A | A | Inventive Example of Present Invention |
| 10 | A | A | A | A | Inventive Example of Present Invention |
| 11 | A | A | A | A | Inventive Example of Present Invention |
| 12 | A | A | A | A | Inventive Example of Present Invention |
| 13 | B | A | A | A | Inventive Example of Present Invention |
| 14 | B | A | A | A | Inventive Example of Present Invention |
| 15 | A | A | A | A | Inventive Example of Present Invention |
| 16 | B | A | A | A | Inventive Example of Present Invention |
| 17 | A | A | A | A | Inventive Example of Present Invention |
| 18 | A | A | A | A | Inventive Example of Present Invention |
| 19 | B | A | A | A | Inventive Example of Present Invention |
| 20 | A | A | A | A | Inventive Example of Present Invention |
| 21 | A | A | B | A | Inventive Example of Present Invention |
| 22 | A | B | A | B | Inventive Example of Present Invention |
| 23 | A | A | A | A | Inventive Example of Present Invention |
| 24 | B | A | A | A | Inventive Example of Present Invention |
| 25 | A | A | A | B | Inventive Example of Present Invention |
| 26 | A | A | A | B | Inventive Example of Present Invention |
| 27 | A | B | A | A | Inventive Example of Present Invention |
| 28 | A | A | A | A | Inventive Example of Present Invention |
| 29 | A | A | C | A | Comparative Example |
| 30 | A | A | C | A | Comparative Example |
| 31 | A | C | B | C | Comparative Example |
| 32 | A | B | A | C | Comparative Example |
| 33 | C | A | A | A | Comparative Example |
| 34 | C | A | A | A | Comparative Example |
| 35 | C | A | A | A | Comparative Example |
| 36 | A | C | C | C | Comparative Example |
| 37 | A | B | A | C | Comparative Example |

(continued)

| Test Number | Visibility | Chemical Resistance | Corrosion Resistance | | Remarks |
|---|---|---|---|---|---|
| | | | Crosscut | Bent Portion | |
| 38 | A | A | A | C | Comparative Example |

[(Test 7) Chemical resistance evaluation test]

The chemical resistance of the decorative metal sheet of each test number was evaluated by the following method.

A sheet-like test specimen having dimensions of 50 mm × 50 mm × the sheet thickness was taken from the decorative metal sheet of each test number. The end faces (side faces) and back surface of the sheet-like test specimen that had been taken were protected with a tape seal. Thereafter, in a state in which the front surface of the sheet-like test specimen was exposed and the end faces (side faces) and back surface were protected with a tape seal, the sheet-like test specimen was immersed for 24 hours in a hydrochloric acid bath containing 5% in percent by mass hydrochloric acid. After 24 hours elapsed, the immersed sheet-like test specimen was taken out and rinsed with water. After being rinsed with water, the sheet-like test specimen was dried at room temperature.

After drying, the appearance of the sheet-like test specimen was evaluated as follows by visual observation.

Evaluation A: Coating blistering, coating peeling, and discoloration did not occur, and there was no abnormality in appearance. In other words, relative to the area of the entire surface, the area fraction of regions where coating blistering, coating peeling, or discoloration occurred was 0%.

Evaluation B: Relative to the area of the entire surface, the area fraction of regions where coating blistering, coating peeling, or discoloration occurred was more than 0% and 30% or less.

Evaluation C: Relative to the area of the entire surface, the area fraction of regions where coating blistering, coating peeling, or discoloration occurred was more than 30%.

In the case of evaluation A or evaluation B, it was evaluated that sufficient chemical resistance was obtained. In the case of evaluation C, it was evaluated that sufficient chemical resistance was not obtained. The evaluation results are shown in the column "Chemical Resistance" in Table 2.

[(Test 8) Crosscut corrosion resistance evaluation test]

The corrosion resistance of the decorative metal sheet of each test number was evaluated by the following method.

Referring to FIG. 14, a sheet-like test specimen 50 having dimensions of 70 mm × 150 mm × the sheet thickness was taken from the decorative metal sheet of each test number. The end faces and back surface of the sheet-like test specimen 50 were protected with tape seal 51. The width of the tape seal 51 on the surface of the sheet-like test specimen 50 was made 5 mm. Thereafter, a crosscut 52 was made that reached the plating layer from the upper resin layer (in the case of a metallic substrate on which a plating layer was not formed, a crosscut 52 was made that reached the surface of the base metal sheet). The length of each line segment 53 of the crosscut 52 was 100 mm. The sheet-like test specimen 50 in which the crosscut 52 had been made was subjected to a 5% NaCl salt spray test maintained at 35°C that was performed in accordance with JIS Z 2371: 2015. The test time was set to 200 hours. After the test time elapsed, the sheet-like test specimen 50 was rinsed with water.

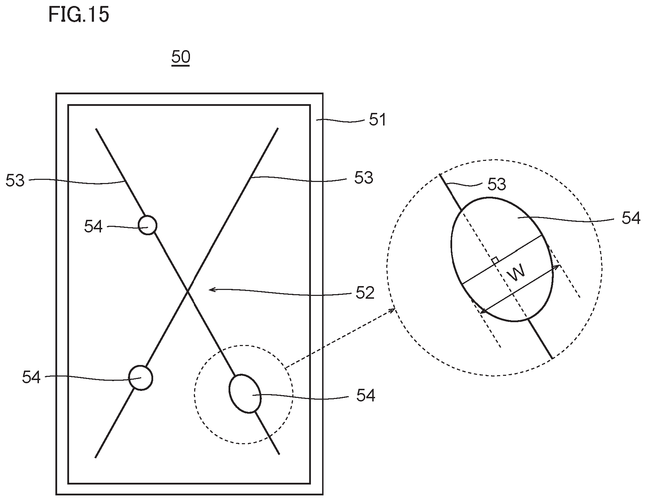

On the surface of the sheet-like test specimen 50 after rinsing with water that is illustrated in FIG. 15, a blister width W of each blister 54 that occurred on each line segment 53 of the crosscut 52 was determined by the following method. For each blister 54 when the sheet-like test specimen 50 was viewed in plan view, the width (mm) of the relevant blister 54 was taken as half the maximum value of a line segment W orthogonal to the line segment 53 and having both end points in contact with the outer circumference of the blister 54. The maximum value of the widths of the plurality of blisters 54 of the sheet-like test specimen 50 was defined as the blister width (mm) of the relevant sheet-like test specimen. Evaluation was performed as follows based on the determined blister width.

Evaluation A: Blister width of 2 mm or less.
Evaluation B: Blister width of more than 2 mm and 5 mm or less.
Evaluation C: Blister width of more than 5 mm.

In the case of evaluation A or evaluation B, it was determined the test specimen was excellent in corrosion resistance (indicated by "A" or "B" in the column "Crosscut" of the "Corrosion Resistance" column in Table 2). In the case of

evaluation C, it was determined that corrosion resistance was low (indicated by "C" in the column "Crosscut" of the "Corrosion Resistance" column in Table 2).

[(Test 9) Bending corrosion resistance evaluation test]

A sheet-like test specimen having dimensions of 40 mm × 40 mm × sheet thickness t was taken from the decorative metal sheet of each test number. In accordance with JIS Z 2248: 2022, bending was performed using a bending apparatus by a winding bend method illustrated in FIG. 6. Referring to FIG. 6, the bending apparatus included a mold 71 and a base 72. The tip of the mold 71 was curved with a curvature radius of 2t. The sheet-like test specimen 1 was placed on the base 72, and the sheet-like test specimen 1 was clamped between the mold 71 and the base 72. Thereafter, the sheet-like test specimen 1 was subjected to bending. At such time, bending was performed so that the upper resin layer 30 side of the sheet-like test specimen 1 curved convexly. Then, as illustrated in FIG. 7, 180° bending was performed with an inner bending radius of 2t.

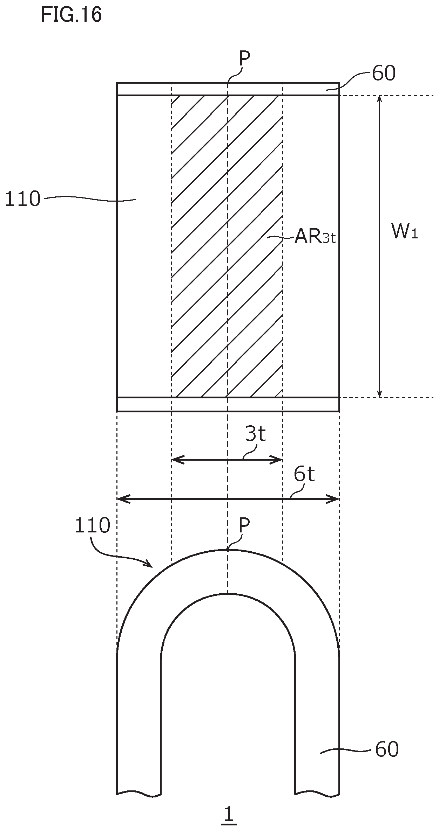

FIG. 16 is a diagram illustrating a sheet-like test specimen after bending as seen in side view and as seen in plan view. Referring to FIG. 16, end faces (side faces) of the sheet-like test specimen 1 after bending were protected with a tape seal 60. The width of the tape seal 60 on the surface of the sheet-like test specimen 1 was set to 5 mm. That is, a width $W_1$ of the exposed surface of the sheet-like test specimen 1 was 30 mm. Thereafter, the sheet-like test specimen 1 after bending was subjected to a salt spray test in accordance with JIS Z 2371: 2015. In the test, a 5% by mass NaCl aqueous solution maintained at 35°C was sprayed for 24 hours.

On the sheet-like test specimen 1 after the test, as illustrated in FIG. 16, on the surface of a convex curved portion 110 of the sheet-like test specimen 1, as viewed in plan view toward a ridge line P of a curved portion 110, a surface region $A_{R3t}$ (the hatched region in FIG. 16) having the ridge line P of the curved portion 110 located at the center thereof and having a length of 3t in the perpendicular direction to the width W1 (that is, the bending direction) was identified. In a state in which the identified surface region $A_{R3t}$ was viewed in plan view, the area of regions where rust had occurred was determined, and the area fraction of the regions where rust had occurred (rust occurrence area fraction) (%) was determined. Note that, the area of the surface region $A_{R3t}$ was 3t × 30 mm. Further, a photographic image of the surface region $A_{R3t}$ as seen in plan view was generated, and the photographic image was used to determine the area where rust had occurred. Corrosion resistance was evaluated as follows based on the determined rust occurrence area fraction.

Evaluation A: Rust occurrence area fraction of 5% or less.
Evaluation B: Rust occurrence area fraction of more than 5% and 30% or less.
Evaluation C: Rust occurrence area fraction of more than 30%.

In the case of evaluation A or evaluation B, it was determined the test specimen was excellent in corrosion resistance (indicated by "A" or "B" in the column "Bent Portion" of the "Corrosion Resistance" column in Table 2). In the case of evaluation C, it was determined that sufficient corrosion resistance was not obtained (indicated by "C" in the column "Bent Portion" of the "Corrosion Resistance" column in Table 2).

[Evaluation results]

Referring to Table 1, in Test Nos. 1 to 28 the content of the rust preventive pigment in the lower resin layer was 0.2 to 30.0%, and the mean particle size of the rust preventive pigment in particulate form was 1.00 μm or less. In addition, the content of the second organic resin was 95% or more in percent by mass. Further, the crack area fraction after bending was 10.0% or less. Therefore, in the decorative metal sheets of these test numbers, excellent chemical resistance and excellent corrosion resistance were obtained, and even when bending was performed, excellent corrosion resistance was obtained.

Among the inventive examples (Test Nos. 1 to 28), in Test Nos. 1 to 5 the metallic substrate did not include a plating layer. Therefore, in the crosscut corrosion resistance evaluation test, the corrosion resistance was evaluated as "B", and when bending was performed, the corrosion resistance was evaluated as "B".

Among the inventive examples (Test Nos. 1 to 28), in Test Nos. 13, 14, 16, and 19, the content of the rust preventive pigment in the lower resin layer was more than 10.0%. Therefore, in these test numbers the visibility was evaluated as "B".

Among the inventive examples (Test Nos. 1 to 28), in Test No. 21 the layer thickness TL of the lower resin layer was thin. Therefore, the corrosion resistance was evaluated as "B" in the crosscut corrosion resistance evaluation test.

Among the inventive examples (Test Nos. 1 to 28), in Test No. 22 the layer thickness TH of the upper resin layer was thin. Therefore, the chemical resistance was evaluated as "B", and the corrosion resistance after bending was evaluated as "B".

Among the inventive examples (Test Nos. 1 to 28), in Test No. 24 the layer thickness TH of the upper resin layer

was thick. Therefore, the visibility was evaluated as "B".

Among the inventive examples (Test Nos. 1 to 28), in Test Nos. 25 and 26, the content of the second organic resin in the upper resin layer was 97% or less in percent by mass. Therefore, the corrosion resistance after bending was evaluated as "B".

Among the inventive examples (Test Nos. 1 to 28), in Test No. 27 the total thickness of the layer thickness TL of the lower resin layer and the layer thickness TH of the upper resin layer was thin. Therefore, the chemical resistance was evaluated as "B".

On the other hand, in Test No. 29, a lower resin layer was not formed. Therefore, in the crosscut corrosion resistance evaluation test, sufficient corrosion resistance was not obtained.

In Test No. 30, the lower resin layer did not contain a rust preventive pigment. Therefore, in the crosscut corrosion resistance evaluation test, sufficient corrosion resistance was not obtained.

In Test No. 31, an upper resin layer was not formed. Therefore, sufficient chemical resistance was not obtained. In addition, when bending was performed, sufficient corrosion resistance was not obtained.

In Test Nos. 32 and 37, in the upper resin layer, the content of the second organic resin was less than 95% in percent by mass, and the crack area fraction was more than 10.0%. Therefore, when bending was performed, sufficient corrosion resistance was not obtained.

In Test Nos. 33 and 34, the mean particle size of the rust preventive pigment in the lower resin layer was too large. Therefore, sufficient visibility was not obtained.

In Test No. 35, the content of the rust preventive pigment in the lower resin layer was too large. Therefore, sufficient visibility was not obtained.

In Test No. 36, a lower resin layer and an upper resin layer were not formed. Therefore, sufficient chemical resistance, and sufficient corrosion resistance in the crosscut corrosion resistance evaluation test were not obtained. In addition, when bending was performed, sufficient corrosion resistance was not obtained.

In Test No. 38, the crack area fraction was more than 10.0%. Therefore, when bending was performed, sufficient corrosion resistance was not obtained.

An embodiment of the present disclosure has been described above. However, the embodiment described above is merely an example for carrying out the present disclosure. Therefore, the present disclosure is not limited to the above-described embodiment, and can be implemented by appropriately modifying the above-described embodiment within a range not departing from the gist thereof.

REFERENCE SIGNS LIST

1 Decorative Metal Sheet
10 Metallic Substrate
101 Base Metal Sheet
102 Plating Layer
110 Curved Portion
111 Surface Region
112 Crack Area Fraction
20 Lower Resin Layer
30 Upper Resin Layer

## Claims

**1.** A decorative metal sheet, comprising:

a metallic substrate,
a lower resin layer formed on the metallic substrate, and
an upper resin layer formed as an outermost layer on the lower resin layer,
wherein
the lower resin layer contains:

a rust preventive pigment that is dissolved in the lower resin layer and/or is in particulate form in the lower resin layer, with a content of the rust preventive pigment being 0.2 to 30.0% in percent by mass, and
first organic resin,
and when the lower resin layer contains the rust preventive pigment in particulate form, a mean particle size of

the rust preventive pigment in particulate form is 1.00 μm or less; and
the upper resin layer contains:

second organic resin in an amount of 95% or more in percent by mass;
and when a sheet thickness of the decorative metal sheet is represented by t (mm), and bending by 180° with an inner bending radius of 2t is performed on the decorative metal sheet by bending defined in JIS Z 2248: 2022 so that the upper resin layer side curves convexly, on a surface of the upper resin layer of a convex curved portion of the decorative metal sheet after bending, in a surface region which is a square of 200 μm × 200 μm and in which a ridge line of the curved portion is located at a central position between two opposing sides of the square, a crack area fraction of the upper resin layer is 10.0% or less.

**2.** The decorative metal sheet according to claim 1, wherein
the rust preventive pigment contains one or more types of element selected from a group consisting of Mo, P, V, Zr, Ti, and Ba.

**3.** The decorative metal sheet according to claim 1, wherein

a layer thickness of the lower resin layer is 1.0 to 5.0 μm, and
a layer thickness of the upper resin layer is 5.0 to 10.0 μm.

**4.** The decorative metal sheet according to claim 3, wherein
a total of the layer thickness of the lower resin layer and the layer thickness of the upper resin layer is 9.0 to 15.0 μm.

**5.** The decorative metal sheet according to claim 1, wherein
a texture is formed on a surface of the metallic substrate.

**6.** The decorative metal sheet according to claim 5, wherein
the texture is hairlines.

**7.** The decorative metal sheet according to claim 1, wherein
the metallic substrate includes:

a base metal sheet, and
a plating layer formed on a surface of the base metal sheet.

**8.** The decorative metal sheet according to claim 1, further comprising:

a chemical conversion coating formed on a surface of the metallic substrate, wherein
the lower resin layer is formed on the chemical conversion coating.

FIG.1

1
L
W
T
30
20
10S
102
10
101

FIG.2

1
L
W
T
30
20
10S
101
10

FIG.3

T
W
L
TX
10S
TX

FIG.4

TL×0.9
30
TL×0.9
21
TL
20
10

FIG.5

TH×0.9
TH×0.9
31
TH
30
20

FIG.6

1
71
72

FIG.7

t
4t
71
72

FIG.8

P
S1
110
(30)
111
S2
110(30)
P
1
t
4t
t

FIG.9

111
112
112
112
B
P

FIG.10

112
112
111
112
15.0kV 34.1mm x500 SE
00um

FIG.11

112
112
111
112
15.0kV 34.7mm x500 SE
100um

FIG.12

111
15.0kV 34.7mm x500 SE
100um

FIG.13

1

L
W
T
30
20
40
10S

FIG.14

50
51
53
53
52

FIG.15

50
51
53
53
53
54
54
54
54
52
W

FIG.16

P
60
110
AR3t
W1
3t
6t
110
P
60
1

**INTERNATIONAL SEARCH REPORT**

International application No.
**PCT/JP2024/040740**

**A. CLASSIFICATION OF SUBJECT MATTER**

***B32B 15/08***(2006.01)i; ***B32B 27/20***(2006.01)i; ***C22C 18/00***(2006.01)i; ***C22C 18/04***(2006.01)i; ***C22C 21/02***(2006.01)i; ***C22C 38/00***(2006.01)i; ***C22C 38/60***(2006.01)i; ***C23C 28/00***(2006.01)i
FI: B32B15/08 H; B32B27/20 Z; C22C18/00; C22C18/04; C22C21/02; C22C38/00 301T; C22C38/60; C23C28/00 A

According to International Patent Classification (IPC) or to both national classification and IPC

**B. FIELDS SEARCHED**

Minimum documentation searched (classification system followed by classification symbols)

B32B1/00-43/00; C22C18/00-18/04; C22C21/00-21/18; C22C38/00-38/60; C23C28/00-28/04

Documentation searched other than minimum documentation to the extent that such documents are included in the fields searched

Published examined utility model applications of Japan 1922-1996
Published unexamined utility model applications of Japan 1971-2025
Registered utility model specifications of Japan 1996-2025
Published registered utility model applications of Japan 1994-2025

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2016-176118 A (JFE GALVANIZING & COATING CO., LTD.) 06 October 2016 (2016-10-06) claims 1-3, paragraphs [0001]-[0002], [0011], [0016]-[0020], [0034], [0042]-[0048], [0050], [0052], [0055]-[0058], [0060]-[0081] | 1-8 |
| A | WO 2018/062515 A1 (NIPPON STEEL & SUMITOMO METAL CORPORATION) 05 April 2018 (2018-04-05) entire text, all drawings | 1-8 |
| A | WO 2019/225765 A1 (NIPPON STEEL CORPORATION) 28 November 2019 (2019-11-28) entire text, all drawings | 1-8 |
| A | JP 8-218001 A (SUMITOMO METAL INDUSTRIES, LTD.) 27 August 1996 (1996-08-27) entire text, all drawings | 1-8 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **10 January 2025** | **21 January 2025** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/040740**

| Patent document cited in search report | Publication date (day/month/year) | Patent family member(s) | Publication date (day/month/year) |
|---|---|---|---|
| JP 2016-176118 A | 06 October 2016 | WO 2016/152119 A1 | |
| WO 2018/062515 A1 | 05 April 2018 | CN 109789671 A | |
| WO 2019/225765 A1 | 28 November 2019 | CN 111683811 A<br>KR 10-2020-0129122 A<br>TW 202003879 A | |
| JP 8-218001 A | 27 August 1996 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2006124824 A
- JP 2013536901 W